# EUROPÄISCHE PATENTSCHRIFT

(11) **EP 3 579 998 B1**
(45) Veröffentlichungstag und Bekanntmachung des Hinweises auf die Patenterteilung: **28.02.2024**
(21) Anmeldenummer: 18720225.4
(22) Anmeldetag: 24.04.2018
(51) Int. Cl.: G05B 19/4099, B33Y 10/00, B29C 64/153, B29C 64/386, B33Y 50/00, B33Y 30/00, B22F 10/28, B22F 10/322, B22F 10/366, B22F 10/38, B22F 10/80, B22F 12/70, B22F 12/90, B22F 10/85, B33Y 50/02, B33Y 40/00

(54) **ERHÖHUNG DER OBERFLÄCHENQUALITÄT**
INCREASE IN SURFACE QUALITY
AUGMENTATION DE LA QUALITÉ DE SURFACE

(30) Priorität: 28.04.2017 DE 102017207256
(43) Veröffentlichungstag der Anmeldung: 18.12.2019
(73) Patentinhaber: EOS GmbH Electro Optical Systems, 82152 Krailling (DE)
(72) Erfinder: HÜMMELER, Ludger, 82131 Gauting (DE); SCHMITT, Christopher, 81549 München (DE)
(74) Vertreter: Prüfer & Partner mbB Patentanwälte · Rechtsanwälte
(86) Internationale Anmeldenummer: PCT/EP2018/060494
(87) Internationale Veröffentlichungsnummer: WO 2018/197506

(56) Entgegenhaltungen:
- EP-A1- 3 127 635
- DE-A1-102013 205 724
- DE-A1-102014 226 839
- DE-A1-102015 204 630

## Beschreibung

Die Erfindung betrifft ein Verfahren und eine Vorrichtung zur Bereitstellung von Steuerdaten für eine generative Schichtbauvorrichtung, ein entsprechend angepasstes generatives Schichtbauverfahren, eine entsprechend angepasste generative Schichtbauvorrichtung und ein entsprechend angepasstes Computerprogramm.

Generative Schichtbauvorrichtungen und zugehörige Verfahren sind allgemein dadurch charakterisiert, dass in ihnen Objekte durch Verfestigen eines formlosen Aufbaumaterials Schicht für Schicht hergestellt werden. Die Verfestigung kann beispielsweise herbeigeführt werden mittels Zufuhr von Wärmeenergie zum Aufbaumaterial durch Bestrahlen desselben mit elektromagnetischer Strahlung oder Teilchenstrahlung (z. B. Lasersintern (SLS bzw. DMLS) oder Laserschmelzen oder Elektronenstrahlschmelzen) oder aber durch Herbeiführen einer Vernetzungsreaktion im Aufbaumaterial (z. B. Stereolithographie).

DE 10 2015 204630 A1 beschreibt ein Verfahren zur Herstellung eines Objekts mittels schichtweiser Verfestigung eines pulverförmigen Aufbaumaterials durch elektromagnetische Strahlung oder Teilchenstrahlung. Dabei besteht mindestens ein Objektquerschnitt aus einem Innenbereich und einem Konturbereich. Bei der Herstellung wird in mindestens einer einem Objektquerschnitt entsprechenden Schicht vor Beginn der Abtastung des Innenbereichs mit Strahlung mindestens ein Teil des Konturbereichs mindestens zweimal abgetastet.

DE 10 2013 205 724 A1 beschreibt ebenfalls ein Verfahren zum Herstellen eines dreidimensionalen Objekts durch schichtweises Aufbringen und selektives Verfestigen eines pulverförmigen Aufbaumaterials durch Einwirkung von Energie. Dabei wird während des Abtastens einer Schicht mit einem Energiestrahl ein Gasstrom in einer Hauptströmungsrichtung über die Schicht geleitet, wobei die Hauptströmungsrichtung des Gasstroms und die Abtastrichtung des Energiestrahls zumindest in einem Bereich des zu verfestigenden Querschnitts aufeinander abgestimmt werden.

EP 3 127 635 A1 beschreibt ein additives Herstellverfahren, bei dem ein Objekt mit einem seitlichen Überhang hergestellt wird. Dabei wird in den Schichten, in denen der Überhang vorhanden ist, die in die Schicht einzutragende Energie schrittweise umso stärker abgesenkt, je näher die zu verfestigende Stelle an einer Kontur (einem Rand) der Schicht im Bereich des Überhangs liegt.

Die in DE 10 2014 226839 A1 beschriebene Erfindung bezieht sich auf ein Verfahren zur Fertigung eines Werkstücks aus einem Rohmaterial, wobei das Werkstück Schicht für Schicht erzeugt wird, indem für jede Schicht Mengeneinheiten des Rohmaterials aufgebracht und mittels eines Laserstahls aufgeschmolzen werden. Dabei wird für die Fertigung eines Überhangbereiches einer Schicht, welcher eine zuvor gefertigte Schicht quer zur Schichtungsrichtung überragt, eine Mengeneinheit des Rohmaterials unter lokalem Einstrahlen einer gegenüber einer ersten Energiemenge verringerten zweiten Energiemenge pro Flächeneinheit aufgeschmolzen.

Insbesondere bei generativen Schichtbauverfahren, bei denen für eine Verfestigung dem Aufbaumaterial Wärmeenergie zugeführt wird, gibt es das Problem, dass die Wärmeleitfähigkeit der Umgebung der Strahlungsauftrefforte innerhalb eines Objektquerschnitts unterschiedlich sein kann, so dass es zu Temperaturdifferenzen in einer verfestigten Schicht und als Folge zu Spannungen im verfestigten Material kommt, die eine verschlechterte Objektqualität nach sich ziehen. Zum Erreichen einer hohen Qualität von mittels eines Laserschmelzverfahrens hergestellten Objekten schlägt WO 2013/079581 A1 daher vor, den Energieeintrag von den Wärmeableitungseigenschaften der Umgebung eines Strahlungsauftreffortes abhängig zu machen. Hierzu wird die Umgebung des Strahlungsauftreffortes in Voxel aufgegliedert und die Anzahl der Voxel ermittelt, in denen das Aufbaumaterial unverfestigt ist, da unverfestigtes Aufbaumaterial gegenüber aufgeschmolzenem bzw. verfestigtem Aufbaumaterial eine schlechtere Wärmeleitfähigkeit hat.

Obwohl das Verfahren nach WO 2013/079581 A1 potentiell zu einer besseren Qualität der Oberflächen eines hergestellten Objekts führen kann, haben die Erfinder festgestellt, dass insbesondere die Qualität jener Objektoberflächen, die während der generativen Herstellung des Objekts parallel zu den Schichten ausgerichtet sind (im Fachjargon als Upskin- und Downskin-Bereiche bezeichnet), noch verbessert werden sollte.

Es ist daher eine Aufgabe der vorliegenden Erfindung, ein Verfahren und eine Vorrichtung bereitzustellen, mittels derer die Qualität von während der generativen Herstellung eines Objekts parallel zu den Schichten ausgerichteten Objektoberflächen verbessert werden kann.

Die Aufgabe wird gelöst durch ein computergestütztes Verfahren nach Anspruch 1, ein generatives Schichtbauverfahren nach Anspruch 5, eine Vorrichtung zur Bereitstellung von Steuerdaten nach Anspruch 12, eine generative Schichtbauvorrichtung nach Anspruch 14 und ein Computerprogramm nach Anspruch 15. Weiterbildungen der Erfindung werden in den abhängigen Ansprüchen beansprucht. Insbesondere kann ein erfindungsgemäßes Verfahren auch durch untenstehend beziehungsweise in den abhängigen Ansprüchen gekennzeichnete Merkmale der erfindungsgemäßen Vorrichtungen weitergebildet sein und umgekehrt. Ferner können die im Zusammenhang mit einer Vorrichtung beschriebenen Merkmale auch zur Weiterbildung einer anderen erfindungsgemäßen Vorrichtung benutzt werden, selbst wenn dies nicht explizit angegeben wird.

Ein erfindungsgemäßes computergestütztes Verfahren zur Bereitstellung von Steuerdaten für eine generative Schichtbauvorrichtung zur Herstellung eines dreidimensionalen Objekts,
wobei in der generativen Schichtbauvorrichtung das zumindest eine Objekt hergestellt wird durch schichtweises Aufbringen eines Aufbaumaterials auf einen Träger oder eine bereits zuvor aufgebrachte Schicht des Aufbaumaterials und Verfestigen des Aufbaumaterials mittels Zufuhr von Strahlungsenergie zu Stellen in einer Schicht, die dem Querschnitt des Objekts in dieser Schicht zugeordnet sind, indem diese Stellen mittels einer Energieeintragseinrichtung dergestalt mit Energiestrahlung abgetastet werden, dass die Energieeintragseinrichtung mindestens ein Energiestrahlbündel so auf vorgegebene Stellen einer Schicht des Aufbaumaterials richtet, dass durch das Energiestrahlbündel eine Verfestigung des Aufbaumaterials bewirkt wird, weist einen ersten Schritt des Zugriffs auf eine Mehrzahl von Schichtdatensätzen auf, die Datenmodelle einer Mehrzahl von während der Herstellung selektiv zu verfestigenden und unmittelbar übereinanderliegenden Aufbaumaterialschichten aufweisen, wobei jeder Schichtdatensatz ein Datenmodell aufweist, in dem einem Objektquerschnitt entsprechende Stellen gekennzeichnet sind, an denen eine Verfestigung des Aufbaumaterials in der zugehörigen Schicht stattfinden soll und wobei in zumindest einem Schichtdatensatz in dem zugehörigen Datenmodell eines Objektquerschnitts ein Bodenflächenbereich (Downskin-Bereich) und ein außerhalb des Bodenflächenbereichs liegender Bereich des Objektquerschnitts vorhanden sind, wobei der Bodenflächenbereich dadurch definiert ist, dass in mindestens einer von p Schichten unterhalb des Bodenflächenbereichs keine Verfestigung von Aufbaumaterial spezifiziert ist, wobei p eine vorgegebene natürliche Zahl größer oder gleich 1 und kleiner als 25 ist, und/oder in dem zugehörigen Datenmodell eines Objektquerschnitts ein Deckflächenbereich (Upskin-Bereich) und ein außerhalb des Deckflächenbereich liegender Bereich des Objektquerschnitts vorhanden sind, wobei der Deckflächenbereich dadurch definiert ist, dass in mindestens einer von q Schichten oberhalb des Deckflächenbereichs keine Verfestigung von Aufbaumaterial spezifiziert ist, wobei q eine vorgegebene natürliche Zahl größer oder gleich 1 und kleiner als 25 ist,
wobei in einem zweiten Schritt der zumindest eine Schichtdatensatz so abgeändert wird, dass eine zeitliche Reihenfolge für die Abtastung des zugehörigen Objektquerschnitts mit Energiestrahlung dergestalt spezifiziert wird, dass zumindest ein Abschnitt des Bodenflächenbereichs, bevorzugt der gesamte Bodenflächenbereich, vor dem außerhalb des Bodenflächenbereichs liegenden Bereich des Objektquerschnitts abgetastet wird oder zumindest ein Abschnitt des Deckflächenbereichs, bevorzugt der gesamte Deckflächenbereich, dem außerhalb des Deckflächenbereichs liegenden Bereich des Objektquerschnitts abgetastet wird, wobei der zeitlich vorrangig abgetastete Abschnitt des Bodenflächenbereichs bzw. der zeitlich vorrangig abgetastete Abschnitt des Deckflächenbereichs nicht ausschließlich Konturbereiche des Objektquerschnitts umfasst und
in einem dritten Schritt der im zweiten Schritt abgeänderte zumindest eine Schichtdatensatz für die Generierung eines Steuerdatensatzes für die generative Schichtbauvorrichtung bereitgestellt wird.

Generative Schichtbauvorrichtungen und -verfahren, auf die sich die vorliegende Erfindung bezieht, sind insbesondere solche, bei denen Energie als elektromagnetische Strahlung oder Teilchenstrahlung selektiv auf eine Schicht des Aufbaumaterials aufgebracht wird. Hierbei kann die Energieeintragseinrichtung beispielsweise einen Laser oder eine Elektronenstrahlquelle aufweisen, denkbar wäre aber auch eine UV-Lichtquelle, die insbesondere in der Stereolithographie verwendet wird. Während in der Stereolithographie eine Verfestigung des Aufbaumaterials bewirkt wird, indem die auf das Aufbaumaterial einwirkende Strahlung in diesem eine Vernetzungsreaktion hervorruft, wird bei anderen Verfahren, insbesondere beim Lasersintern oder Laserschmelzen bzw. Elektronenstrahlschmelzen dem Aufbaumaterial Wärme zugeführt. Dabei wird das Aufbaumaterial mittels der durch die Strahlung eingebrachten Energie teilweise oder vollständig aufgeschmolzen, wodurch sich die Bestandteile des Aufbaumaterials (beispielsweise Pulverkörner) miteinander verbinden. Nach seiner Abkühlung liegt das Aufbaumaterial dann als Festkörper vor. Da die Übergänge zwischen oberflächlichem Aufschmelzen (Sintern) und vollständigem Aufschmelzen (Schmelzen) fließend sind, werden die Begriffe Sintern und Schmelzen in der vorliegenden Anmeldung synonym verwendet und nicht zwischen Sintern und Schmelzen unterschieden.

Wenn in dieser Anmeldung von unterhalb oder oberhalb eines Objektquerschnitts vorhandenen Schichten die Rede ist, dann bezieht sich diese Richtungsangabe auf eine Richtung, die im Wesentlichen senkrecht auf den Schichtebenen steht bzw. senkrecht zur Bauebene liegt. Der Begriff "im Wesentlichen" bringt hier zum Ausdruck, dass die Schichtdicke in manchen Fällen nicht einheitlich sein kann, z. B. die Schichtdicke sich über den Objektquerschnitt hinweg monoton ändern kann. Es wird in diesem Zusammenhang angenommen, dass untenliegende Schichten zeitlich vor den darüberliegenden Schichten aufgetragen wurden und daher unterhalb der darüberliegenden Schichten angeordnet sind.

Der Begriff "Strahlbündel" soll zum Ausdruck bringen, dass nicht nur Strahlen umfasst sind, die beim Auftreffen auf das Aufbaumaterial einen runden Querschnitt aufweisen, sondern ebenfalls Strahlen, die z. B. einen linienförmigen Querschnitt aufweisen oder gar Strahlung, die gleichzeitig in einen größeren Bereich des Aufbaumaterials (also flächig) eingetragen wird. Beispielsweise werden auch bei einem Maskensinterverfahren bestrahlte großflächige Bereiche als Strahlbündel im Sinne der vorliegenden Erfindung angesehen. Weiterhin spielt es für die vorliegende Erfindung keine weitere Rolle, ob die Energieeintragseinrichtung ein oder mehrere Energiestrahlbündel nacheinander oder gleichzeitig auf das Aufbaumaterial richten kann, sofern die im zweiten Schritt spezifizierte zeitliche Reihenfolge eingehalten wird.

Es sei an dieser Stelle bemerkt, dass mittels einer erfindungsgemäßen generativen Schichtbauvorrichtung nicht nur ein Objekt, sondern auch mehrere Objekte gleichzeitig hergestellt werden können. Wenn in der vorliegenden Anmeldung an einer Stelle von der Herstellung eines Objekts die Rede ist, dann versteht es sich, dass die jeweilige Beschreibung in gleicher Weise auch auf generative Schichtbauverfahren und -vorrichtungen anwendbar ist, bei denen mehrere Objekte gleichzeitig hergestellt werden.

Als Steuerdatensatz (oft auch als Steuerbefehlssatz bezeichnet) wird hier eine Abfolge von Anweisungen angesehen, Schichten des Aufbaumaterials nacheinander aufzutragen und Bereiche der jeweiligen Schichten, die dem Querschnitt eines herzustellenden Objektes entsprechen, mit Energiestrahlung abzutasten, um das Aufbaumaterial zu verfestigen.

Im Detail basiert ein Steuerdatensatz auf einem computerbasierten Modell des oder der herzustellenden Objekte, bevorzugt einem CAD-Modell. Der Steuerdatensatz legt für jede Aufbaumaterialschicht während der Herstellung insbesondere die Dicke des Schichtauftrags und die Stellen, an denen durch Strahlungszufuhr eine Verfestigung des Aufbaumaterials bewirkt werden soll, fest. Des Weiteren enthält ein Steuerdatensatz oftmals auch herstellungsspezifische Informationen, beispielsweise bezüglich der Lage und Orientierung der Objekte in der generativen Schichtbauvorrichtung oder bezüglich eines Durchmessers des Energiestrahl(bündel)s beim Auftreffen auf das Aufbaumaterial. In der Regel enthält der Steuerdatensatz alle zur Steuerung der Energieeintragsvorrichtung erforderlichen Daten, wodurch u.a. die Energiedichte der Energiestrahlung und gegebenenfalls die Verfahrgeschwindigkeit des Strahlbündels über das Aufbaumaterial und/oder ein Bestrahlungsmuster festgelegt werden.

Der Steuerdatensatz kann somit als Gesamtheit aller für die Steuerung des Herstellungsvorgangs in einer generativen Schichtbauvorrichtung vorgegebenen Steuerdaten angesehen werden. Die auf eine einzelne Schicht bezogenen Steuerdaten werden dabei im Folgenden auch als Schichtdatensatz bezeichnet.

In der vorliegenden Anmeldung wird ein Schichtdatensatz als Datensatz angesehen, der ein Datenmodell einer während des Herstellungsverfahrens an den Stellen eines Objektquerschnitts zu verfestigenden Aufbaumaterialschicht enthält. Solch ein Schichtdatensatz wird in der Regel durch Zerlegen eines CAD-Modells des herzustellenden Objekts in Schichten (im Fachjargon als Slicing bezeichnet) erhalten. Es ist aber auch denkbar, eine zweidimensionale Repräsentation des in einer Schicht mittels eines oder mehrerer Strahlen zu verfestigenden Objektquerschnitts auf anderweitige Weise aus dem computerbasierten CAD-Modell des Objekts zu extrahieren. In dem Schichtdatensatz können, müssen aber nicht, noch weitere Informationen hinsichtlich der Herstellung des Objektquerschnitts enthalten sein, z. B. die Schichtdicke oder Bestrahlungsparameterwerte wie beispielsweise der Durchmesser eines auf das Aufbaumaterial auftreffenden Strahlbündels, etc.

Wenn von einem Zugriff auf eine Mehrzahl von Schichtdatensätzen die Rede ist, dann ist damit gemeint, dass Schichtdatensätze aus einem Speicher ausgelesen werden oder aber die den Schichtdatensätzen entsprechenden Daten über ein Netzwerk entgegengenommen werden. Dabei müssen die Schichtdatensätze nicht zwangsläufig gemeinsam (also gleichzeitig) eingelesen werden. Es ist auch möglich, dass es einen größeren zeitlichen Abstand zwischen den Zugriffvorgängen auf die Schichtdatensätze gibt, beispielsweise ein Schichtdatensatz jeweils bei Bedarf während eines Herstellungsvorgangs eines Objekts eingelesen wird und ein abgeänderter Schichtdatensatz dann während des Herstellungsvorgangs in den Steuerdatensatz integriert wird.

Die Bereitstellung des im zweiten Schritt abgeänderten Schichtdatensatzes für die Generierung eines Steuerdatensatzes kann z. B. durch die Schichtdatensatz-Bereitstellungseinheit 103 selbst geschehen, indem diese den abgeänderten Schichtdatensatz in einen Steuerdatensatz für die generative Schichtbauvorrichtung integriert. Bereitstellen umfasst aber auch ein Weiterleiten des Schichtdatensatzes an eine Datenverarbeitungsvorrichtung, welche den Schichtdatensatz in einen Steuerdatensatz integriert, oder ein direktes Weiterleiten an eine generative Schichtbauvorrichtung. Insbesondere ist es möglich, ihr während eines Herstellvorgangs in der generativen Schichtbauvorrichtung dynamisch Schichtdatensätze für noch herzustellende Objektquerschnitte zur Verfügung zu stellen. Insbesondere müssen erfindungsgemäß abgeänderte Schichtdatensätze nicht einzeln für einen generativen Schichtbauvorgang bereitgestellt werden. Vielmehr können auch mehrere abgeänderte Schichtdatensätze zunächst gesammelt und anschließend in ihrer Gesamtheit zur Integration in einen Steuerdatensatz bereitgestellt werden.

Während des Herstellungsvorgangs in einer generativen Schichtbauvorrichtung, insbesondere wenn durch die Energiestrahlung Wärmeenergie in das Aufbaumaterial eingetragen wird, kann es beim Auftreffen der Energiestrahlung auf das Aufbaumaterial zu Ausdampfungen und Raucherzeugung kommen. Prozessturbulenzen können dazu führen, dass von der Auftreffstelle der Energiestrahlung auf das Aufbaumaterial Spritzer zunächst flüssigen Materials ausgehen, welche im Allgemeinen als Spratzer bezeichnet werden.

Die Erfinder haben die Erfahrung gemacht, dass in einem zu verfestigenden Objektquerschnitt gerade in Bodenflächenbereichen und Deckflächenbereichen eine Einstellung des Energieeintrags zur Erzielung einer guten Oberflächenqualität schwierig ist, da diese Bereiche senkrecht zur Aufbaumaterialschicht an unverfestigt bleibendes Material angrenzen. Insbesondere konnten die Erfinder beobachten, dass Niederschläge auf unverfestigtem Aufbaumaterial und Dämpfe bzw. Rauch im Strahlengang eines Energiestrahlbündels zu einer unebenen, rauhen Oberfläche und zu Temperaturinhomogenitäten und damit z. B. zu unvollkommenem Aufschmelzen bzw. Verfestigen bzw. zu einer inhomogenen Dichte führen können. Falls Spratzer auf unverfestigtes Material gelangen, treten die beschriebenen Inhomogenitäten in verstärktem Maße auf. Bei diesen Gegebenheiten ist es besonders schwer, in Bodenflächenbereichen und Deckflächenbereichen die lokal jeweils adäquate Energiemenge für eine Verfestigung des Aufbaumaterials zuzuführen. Durch das beschriebene Vorgehen wird jedoch erreicht, dass die nachteiligen Auswirkungen von Spratzern, Dämpfen und Rauch begrenzt werden können, da ein Abschnitt eines Bodenflächen- oder Deckflächenbereichs zeitlich vorrangig mit Energiestrahlung abgetastet wird, so dass Spratzer, Dämpfe und Rauch, die von der Verfestigung des restlichen Objektquerschnitts herrühren, nicht die Verfestigung des Abschnitts eines Bodenflächen- oder Deckflächenbereichs beeinträchtigen.

Natürlich sollte bevorzugt der gesamte Bodenflächen- oder Deckflächenbereich zeitlich vorrangig mit Energiestrahlung abgetastet werden, jedoch kann es in bestimmten Fällen auch ausreichen, wenn nur ein oder mehrere bestimmte Abschnitte des Bodenflächen- oder Deckflächenbereichs zeitlich vorrangig abgetastet werden, sofern z. B. diese Abschnitte für die Objektqualität wichtiger sind als der Rest des Bodenflächen- bzw. Deckflächenbereichs.

Es sei erwähnt, dass es in der Regel auch Konturbereiche eines Objektquerschnitts gibt, insbesondere die normalerweise durch Verfahren eines Strahls entlang des Randes eines Objektquerschnitts zu verfestigende Kontur eines Objektquerschnitts. Diese Konturbereiche eines Objektquerschnitts können zwar ebenfalls Bestandteil eines Bodenflächenbereichs, eines Deckflächenbereichs oder einer Sandwich-Region sein, die vorliegende Erfindung bezieht sich jedoch ausschließlich auf Nichtkonturbereiche. Dies bedeutet, der zeitlich vorrangig abgetastete Abschnitt des Bodenflächen- oder Deckflächenbereichs kann zwar einen Konturbereich enthalten, es ist jedoch der Fall ausgeschlossen, in dem der Abschnitt ausschließlich Konturbereiche enthält. Vorzugsweise umfasst der zeitlich vorrangig abgetastete Abschnitt des Bodenflächen- oder Deckflächenbereichs ausschließlich Nichtkonturbereiche. Ebenso sind alle weiteren zu verfestigenden Stellen des Objektquerschnitts, vor denen zumindest ein Abschnitt des Bodenflächen- oder Deckflächenbereichs abgetastet wird, vorzugsweise Nichtkonturbereiche.

Vorzugsweise umfasst der zeitlich vorrangig mit Energiestrahlung abgetastete Abschnitt des Bodenflächen- oder Deckflächenbereichs mindestens 60%, weiter bevorzugt mindestens 80%, besonders bevorzugt mindestens 90% des jeweiligen Flächeninhalts des Bodenflächen- bzw. Deckflächenbereichs des zugehörigen Objektquerschnitts. Somit wird beispielsweise ein zum Verbessern der Objektqualität ausreichender Abschnitt des Bodenflächen- oder Deckflächenbereichs zeitlich vorrangig mit Energiestrahlung abgetastet.

Bei einer Weiterbildung der Erfindung werden dem zumindest einen Abschnitt des Bodenflächenbereichs, noch bevorzugter dem gesamten Bodenflächenbereich, und/oder dem zumindest einen Abschnitt des Deckflächenbereichs, noch bevorzugter dem gesamten Deckflächenbereich, Belichtungsbereiche zugeordnet, wobei in jedem Belichtungsbereich eine Abtastung des Aufbaumaterials mit mindestens einem Energiestrahlbündel in vorzugsweise zueinander parallelen Scanlinien spezifiziert ist.

Bevorzugt weisen die Belichtungsbereiche die gleiche Größe und/oder Gestalt (insbesondere eine rechteckige oder quadratische Gestalt) auf. Als Scanlinie wird hier die Spur eines Strahlbündels bei seiner Bewegung über das Aufbaumaterial zum Eintrag von Energie verstanden. Innerhalb der Belichtungsbereiche kann das Aufbaumaterial z. B. durch Verfahren eines oder mehrerer Strahlbündel in im Wesentlichen zueinander parallelen geraden Scanlinien abgetastet werden (im Fachjargon als Hatchen bezeichnet), wobei diese Methode in Bestrahlungsstrategien wie z. B. ein Schachbrett- oder Streifenmuster eingebettet sein kann. Zusätzlich oder alternativ kann/können das/die Strahlbündel beispielsweise auch auf zur Kontur des Belichtungsbereichs parallelen Scanlinien (im Fachjargon als "onion-ring hatching" bzw. "zwiebelringartige Belichtung" bezeichnet) verfahren werden. Die Zuweisung von Belichtungsbereichen zu Bodenflächen- oder Deckflächenbereichen führt ebenfalls zu einer Verbesserung der Oberflächenqualität.

Bei einer anderen Weiterbildung der Erfindung wird bei einer Zuordnung von Belichtungsbereichen für den Fall, dass eine Abmessung eines Abschnitts, über den ein Energiestrahlbündel zu bewegen ist, so klein ist und/oder eine Geschwindigkeit der Bewegung eines Energiestrahlbündels über das Aufbaumaterial so groß ist, dass bei der Abtastung entlang einer ersten Scanlinie eine vorgegebene Mindestzeitdauer unterschritten wird, nach Abtasten entlang der ersten Scanlinie eine Wartezeit spezifiziert, bevor das Energiestrahlbündel entlang einer zweiten Scanlinie bewegt wird, und/oder eine entlang der ersten Scanlinie und/oder der zweiten Scanlinie pro Einheitsfläche eingetragene Strahlungsenergie verringert. Durch solch ein Vorgehen kann der Energieeintrag in einen Abschnitt eines Boden- und Deckflächenbereichs homogener gestaltet werden, selbst wenn ein solcher Abschnitt in einer Richtung eine nur geringe Abmessung hat.

Bei einer anderen Weiterbildung der Erfindung ist für p und/oder q ein Wert kleiner als 10, noch bevorzugter kleiner als 5 vorgegeben. Im Rahmen der Erfindung werden nicht zwingend nur jene Bereiche eines Objektquerschnitts als Bodenflächen- oder Deckflächenbereiche angesehen, die an unverfestigtes Aufbaumaterial in der unmittelbar darüberliegenden oder darunterliegenden Schicht grenzen. Die Erfinder konnten zwar für p=1 und q=1 eine deutliche Verbesserung der Oberflächenqualität beobachten, die Erfinder haben jedoch auch festgestellt, dass ein Einfluss auf das Verfestigungsverhalten auch dann vorliegen kann, wenn sich unverfestigtes Aufbaumaterial in der übernächsten oder einer noch weiter entfernten Schicht befindet. Werte für die Parameter p und q, durch welche vorgegeben wird, wann noch ein Einfluss von unverfestigtem Aufbaumaterial vorhanden ist, können in Abhängigkeit von Erfahrungen mit einem bestimmten Aufbaumaterial und einer bestimmten generativen Schichtbauvorrichtung festgelegt werden, z.B. nach Vorversuchen.

Bei einem erfindungsgemäßen generativen Schichtbauverfahren zur Herstellung eines dreidimensionalen Objekts, wobei das Objekt hergestellt wird durch schichtweises Aufbringen eines Aufbaumaterials auf einen Träger oder eine bereits zuvor aufgebrachte Schicht des Aufbaumaterials und Verfestigen des Aufbaumaterials mittels Zufuhr von Strahlungsenergie zu Stellen in einer Schicht, die dem Querschnitt des Objekts in dieser Schicht entsprechen, indem diese Stellen mittels einer Energieeintragseinrichtung dergestalt mit Energiestrahlung abgetastet werden, dass die Energieeintragseinrichtung mindestens ein Energiestrahlbündel so auf vorgegebene Stellen einer Schicht des Aufbaumaterials richtet, dass durch das Energiestrahlbündel eine Verfestigung des Aufbaumaterials bewirkt wird, wird der Ablauf durch einen Steuerdatensatz gesteuert, der auf der Grundlage zumindest eines Schichtdatensatzes generiert wurde, der mittels eines erfindungsgemäßen Verfahrens zur Bereitstellung von Steuerdaten bereitgestellt wurde. Damit lassen sich Objekte mit verbesserter Qualität des Boden- oder Deckflächenbereichs herstellen.

Bei einer Weiterbildung des erfindungsgemäßen generativen Schichtbauverfahrens wird über den jeweiligen Auftreffort eines Energiestrahlbündels ein Gasstrom geleitet und der Ablauf des generativen Schichtbauverfahrens durch einen Steuerdatensatz gesteuert, in dem spezifiziert ist, dass in einer Schicht der Objektquerschnitt Stellen außerhalb des Bodenflächenbereichs aufweist, die weiter stromaufwärts liegen als Stellen in dem zumindest einen Abschnitt des Bodenflächenbereichs, und/oder dass in einer Schicht der Objektquerschnitt Stellen außerhalb des Deckflächenbereichs aufweist, die weiter stromaufwärts liegen als Stellen in dem zumindest einen Abschnitt des Deckflächenbereichs. Typischerweise wird ein Strom von Inertgas, z. B. Argon oder Stickstoff, zumindest über Bereiche eines Baufelds einer generativen Schichtbauvorrichtung geleitet. Dabei verläuft der Gasstrom häufig in einer unteren Hälfte einer Prozesskammer der generativen Schichtbauvorrichtung. Er kann beispielsweise eine Höhenerstreckung von circa 10cm oder 30cm aufweisen und seine dem Baufeld nächstliegende Grenze, d. h. sein unterer Rand, kann in einer Höhe von circa 1cm oder 3cm über dem Baufeld liegen. Dabei sind derartige ungeführt verlaufende Gasströme in der Regel instationär, d. h. sie unterliegen gewissen Fluktuationen. Sie können auch mehrere, gegebenenfalls teilweise separat verlaufende, Gasteilströme umfassen.

Wenn über den Auftreffort eines Energiestrahlbündels auf das Aufbaumaterial ein Gasstrom geleitet wird, dann können Rauch bzw. Dämpfe, die durch das Auftreffen eines Strahlbündels auf das Aufbaumaterial entstehen, vom Auftreffort entfernt werden. Dabei bewegen sich Rauch bzw. Dämpfe im Wesentlichen mit dem Gasstrom mit, so dass sie sich bevorzugt stromabwärts niederschlagen. Bevorzugt, aber nicht notwendigerweise, gibt es dabei eine Hauptströmungsrichtung des Gases über dem Aufbaumaterial. Mit anderen Worten ist die Richtung des Gasstroms an den unterschiedlichen Auftrefforten der Strahlung auf das Aufbaumaterial im Wesentlichen gleich.

Bei der Weiterbildung des erfindungsgemäßen generativen Schichtbauverfahrens weist der Abschnitt des Boden- oder Deckflächenbereichs, der zeitlich vor dem Rest des Objektquerschnitts abzutasten ist, Stellen auf, die stromabwärts vom Rest des Objektquerschnitts liegen, da an diesen Stellen bei der Verfestigung des restlichen Objektquerschnitts entstehende Verunreinigungen (z. B. Rauch und Dämpfe, aber auch Spratzer) in erster Linie eine homogene Verfestigung beeinträchtigen. Vorzugsweise sollte der vorrangig abzutastende Abschnitt alle Stellen enthalten, die stromabwärts von anderen Stellen des Objektquerschnitts liegen. Bei einer anderen Weiterbildung des erfindungsgemäßen generativen Schichtbauverfahrens wird der Ablauf des generativen Schichtbauverfahrens durch einen Steuerdatensatz gesteuert, in dem spezifiziert ist, dass in einer Schicht der Objektquerschnitt Stellen außerhalb des Bodenflächenbereichs aufweist, die innerhalb eines vorgegebenen Winkelbereichs (α) um die Richtung herum, aus der der Gasstrom kommt, weiter stromaufwärts liegen als Stellen in dem zumindest einen Abschnitt des Bodenflächenbereichs und/oder dass in einer Schicht der Objektquerschnitt Stellen außerhalb des Deckflächenbereichs (61) aufweist, die innerhalb eines vorgegebenen Winkelbereichs (α) um die Richtung herum, aus der der Gasstrom kommt, weiter stromaufwärts liegen als Stellen in dem zumindest einen Abschnitt des Deckflächenbereichs. Da die Bewegungsrichtung der Verunreinigungen im Allgemeinen nicht immer exakt mit der Richtung des Gasstroms zusammenfallen wird, kann bei der Weiterbildung ein Abweichen der Bewegungsrichtung von der Richtung des Gasstroms berücksichtigt werden, um dadurch die Qualität noch weiter zu verbessern. Wiederum sollte der vorrangig abzutastende Abschnitt vorzugsweise alle Stellen enthalten, für die es außerhalb des Boden- oder Deckflächenbereichs liegende Stellen des Objektquerschnitts gibt, die innerhalb eines vorgegebenen Winkelbereichs um die Richtung herum, aus der der Gasstrom kommt, weiter stromaufwärts liegen.

Bevorzugt wird bei der Weiterbildung ein Bereich zwischen -22,5° und +22,5° um die Richtung herum, aus der der Gasstrom kommt, als Winkelbereich vorgegeben. Die Erfinder haben festgestellt, dass in Abhängigkeit von den Randbedingungen des Herstellungsverfahrens die genannten Bereiche im Allgemeinen zu einer guten Qualität führen.

Bei einer anderen Weiterbildung des erfindungsgemäßen generativen Schichtbauverfahrens wird die Energieeintragseinrichtung so angesteuert, dass die Abtastrichtung, in der das Energiestrahlbündel an einer Verfestigungsstelle über das Aufbaumaterial bewegt wird, und die Richtung des Gasstroms an dieser Stelle einen Winkel γ zueinander aufweisen, der größer oder gleich 22,5° und/oder kleiner oder gleich 337,5° ist, vorzugsweise größer oder gleich 45° und/oder kleiner oder gleich 315° ist, in weiter bevorzugter Weise größer oder gleich 60° und/oder kleiner oder gleich 300° ist und in noch weiter bevorzugter Weise größer oder gleich 90° und/oder kleiner oder gleich 270°. Mit solch einer bevorzugten Randbedingung für die Bewegung des/der Strahlbündel kann verhindert werden, dass Verunreinigungen sich auf der jeweils als Nächstes zu verfestigenden Stelle niederschlagen. Solch ein Vorgehen ergibt nicht nur im Boden- und Deckflächenbereich Sinn, sondern auch an anderen Stellen eines Objektquerschnitts.

Bei einer noch einer anderen Weiterbildung des erfindungsgemäßen generativen Schichtbauverfahrens wird der Ablauf durch einen Steuerdatensatz gesteuert, der auf der Grundlage zumindest eines Schichtdatensatzes generiert wurde, welcher mittels eines Verfahrens bereitgestellt wurde, bei dem dem zumindest einen Abschnitt des Bodenflächenbereichs, noch bevorzugter dem gesamten Bodenflächenbereich, und/oder dem zumindest einen Abschnitt des Deckflächenbereichs, noch bevorzugter dem gesamten Deckflächenbereich, Belichtungsbereiche zugeordnet wurden, wobei in jedem Belichtungsbereich eine Abtastung des Aufbaumaterials mit mindestens einem Energiestrahlbündel in vorzugsweise zueinander parallelen Scanlinien spezifiziert wurde. Bei dieser weiteren Weiterbildung wird die Energieeintragseinrichtung so angesteuert, dass die Abtastrichtungen zweier benachbarter Scanlinien in zumindest einem Belichtungsbereich einander entgegengesetzt sind. Weiterhin weisen eine Vorschubrichtung, in der die Scanlinien in diesem Belichtungsbereich nacheinander mit dem mindestens einen Energiestrahlbündel abgefahren werden, und die über alle Stellen des zumindest einen Belichtungsbereichs gemittelte Richtung des Gasstroms einen Winkel β zueinander auf, der größer oder gleich 112,5° und/oder kleiner oder gleich 247,5° ist, vorzugsweise größer oder gleich 135° und/oder kleiner oder gleich 225° ist, in weiter bevorzugter Weise größer oder gleich 150° und/oder kleiner oder gleich 210° ist.

Bei dieser weiteren Weiterbildung muss insbesondere die Richtung des Gasstroms nicht zwingend über allen Auftrefforten eines Strahlbündels innerhalb eines Objektquerschnitts gleich sein. Es reicht, wenn die Richtung des Gasstroms zumindest über einem Belichtungsbereich mehr oder weniger gleich ist. Mit dem beschriebenen Vorgehen wird verhindert, dass Verunreinigungen in den sukzessive in Scanlinien abzutastenden Bereich der Aufbaumaterialschicht gelangen können, wobei zusätzlich die Richtung, in der die Scanlinien durchlaufen werden, berücksichtigt wird. Das Vorgehen ergibt wiederum nicht nur im Boden- und Deckflächenbereich Sinn, sondern auch an anderen Stellen eines Objektquerschnitts.

Bei einer weiteren Weiterbildung des erfindungsgemäßen generativen Schichtbauverfahrens wird der Ablauf durch einen Steuerdatensatz gesteuert, der auf der Grundlage zumindest eines Schichtdatensatzes generiert wurde, welcher mittels eines Verfahrens bereitgestellt wurde, bei dem dem zumindest einen Abschnitt des Bodenflächenbereichs, noch bevorzugter dem gesamten Bodenflächenbereich, und/oder dem zumindest einen Abschnitt des Deckflächenbereichs, noch bevorzugter dem gesamten Deckflächenbereich, Belichtungsbereiche zugeordnet wurden, wobei in jedem Belichtungsbereich eine Abtastung des Aufbaumaterials mit mindestens einem Energiestrahlbündel in vorzugsweise zueinander parallelen Scanlinien spezifiziert wurde. Bei einer weiteren Weiterbildung wird die Energieeintragseinrichtung so angesteuert, dass die Abtastrichtungen aller Scanlinien in einem Belichtungsbereich gleich sind. Dabei weisen eine Vorschubrichtung, in der die Scanlinien in diesem Belichtungsbereich nacheinander mit dem mindestens einen Energiestrahlbündel abgefahren werden, und die über alle Stellen des zumindest einen Belichtungsbereichs gemittelte Richtung des Gasstroms einen Winkel β zueinander auf, der größer oder gleich 22,5° und/oder kleiner oder gleich 337,5° ist, vorzugsweise größer oder gleich 45° und/oder kleiner oder gleich 315° ist, in weiter bevorzugter Weise größer oder gleich 60° und/oder kleiner oder gleich 300° ist, wobei die Abtastrichtungen und die über alle Stellen des zumindest einen Belichtungsbereichs gemittelte Richtung des Gasstroms einen Winkel zueinander aufweisen, der größer oder gleich 90° ist.

Auch bei dieser weiteren Weiterbildung muss die Richtung des Gasstroms nicht zwingend über allen Auftrefforten eines Strahlbündels gleich sein. Es reicht, wenn die Richtung des Gasstroms zumindest über einem Belichtungsbereich mehr oder weniger gleich ist. Mit dem beschriebenen Vorgehen wird verhindert, dass Verunreinigungen in den sukzessive in Scanlinien abzutastenden Bereich der Aufbaumaterialschicht gelangen können, wobei zusätzlich die Richtung, in der die Scanlinien durchlaufen werden, berücksichtigt wird. Das Vorgehen ergibt wiederum nicht nur im Boden- und Deckflächenbereich Sinn, sondern auch an anderen Stellen eines Objektquerschnitts.

Eine erfindungsgemäße Vorrichtung zur Bereitstellung von Steuerdaten für eine generative Schichtbauvorrichtung zur Herstellung eines dreidimensionalen Objekts,
wobei in der generativen Schichtbauvorrichtung das zumindest eine Objekt hergestellt wird durch schichtweises Aufbringen eines Aufbaumaterials auf einen Träger oder eine bereits zuvor aufgebrachte Schicht des Aufbaumaterials und Verfestigen des Aufbaumaterials mittels Zufuhr von Strahlungsenergie zu Stellen in einer Schicht, die dem Querschnitt des Objekts in dieser Schicht zugeordnet sind, indem diese Stellen mittels einer Energieeintragseinrichtung dergestalt mit Energiestrahlung abgetastet werden, dass die Energieeintragseinrichtung mindestens ein Energiestrahlbündel so auf vorgegebene Stellen einer Schicht des Aufbaumaterials richtet, dass durch das Energiestrahlbündel eine Verfestigung des Aufbaumaterials bewirkt wird, weist auf:
eine Datenzugriffseinheit, die ausgelegt ist zum Zugriff auf eine Mehrzahl von Schichtdatensätzen, welche Datenmodelle einer Mehrzahl von während der Herstellung selektiv zu verfestigenden und unmittelbar übereinander liegenden Aufbaumaterialschichten aufweisen, wobei jeder Schichtdatensatz ein Datenmodell aufweist, in welchem einem Objektquerschnitt entsprechende Stellen gekennzeichnet sind, an denen eine Verfestigung des Aufbaumaterials in der zugehörigen Schicht stattfinden soll und wobei in zumindest einem Schichtdatensatz in dem zugehörigen Datenmodell eines Objektquerschnitts ein Bodenflächenbereich und ein außerhalb des Bodenflächenbereichs liegender Bereich des Objektquerschnitts vorhanden sind, wobei der Bodenflächenbereich dadurch definiert ist, dass in mindestens einer von p Schichten unterhalb des Bodenflächenbereichs keine Verfestigung von Aufbaumaterial spezifiziert ist, wobei p eine vorgegebene natürliche Zahl größer oder gleich 1 und kleiner als 25 ist, und/oder in dem zugehörigen Datenmodell eines Objektquerschnitts ein Deckflächenbereich und ein außerhalb des Deckflächenbereich liegender Bereich des Objektquerschnitts vorhanden sind, wobei der Deckflächenbereich dadurch definiert ist, dass in mindestens einer von q Schichten oberhalb des Deckflächenbereichs keine Verfestigung von Aufbaumaterial spezifiziert ist, wobei q eine vorgegebene natürliche Zahl größer oder gleich 1 und kleiner als 25 ist,
eine Schichtdatensatz-Abänderungseinheit, die ausgelegt ist, den zumindest einen Schichtdatensatz so abzuändern, dass eine zeitliche Reihenfolge für die Abtastung des zugehörigen Objektquerschnitts mit Energiestrahlung dergestalt spezifiziert wird, dass zumindest ein Abschnitt des Bodenflächenbereichs, bevorzugt der gesamte Bodenflächenbereich, vor dem außerhalb des Bodenflächenbereichs liegenden Bereich des Objektquerschnitts abgetastet wird oder zumindest ein Abschnitt des Deckflächenbereichs, bevorzugt der gesamte Deckflächenbereich, vor dem außerhalb des Deckflächenbereichs liegenden Bereich des Objektquerschnitts abgetastet wird, wobei der zeitlich vorrangig abgetastete Abschnitt des Bodenflächenbereichs bzw. der zeitlich vorrangig abgetastete Abschnitt des Deckflächenbereichs nicht ausschließlich Konturbereiche des Objektquerschnitts umfasst und
eine Schichtdatensatz-Bereitstellungseinheit, die ausgelegt ist, einen durch die Schichtdatensatz-Abänderungseinheit abgeänderten zumindest einen Schichtdatensatz für die Generierung eines Steuerdatensatzes für die generative Schichtbauvorrichtung bereitzustellen.

Bevorzugt ist die erfindungsgemäße Vorrichtung geeignet, ein erfindungsgemäßes Verfahren zur Bereitstellung von Steuerdaten auszuführen.

Eine erfindungsgemäße generative Schichtbauvorrichtung zur Herstellung eines dreidimensionalen Objekts, wobei in der generativen Schichtbauvorrichtung das Objekt hergestellt wird durch schichtweises Aufbringen eines Aufbaumaterials auf einen Träger oder eine bereits zuvor aufgebrachte Schicht des Aufbaumaterials und Verfestigen des Aufbaumaterials mittels Zufuhr von Strahlungsenergie zu Stellen in einer Schicht, die dem Querschnitt des Objekts in dieser Schicht entsprechen, indem diese Stellen mittels einer Energieeintragseinrichtung mit Energiestrahlung abgetastet werden, weist auf:
eine Energieeintragseinrichtung, die geeignet ist, mindestens ein Energiestrahlbündel so auf vorgegebene Stellen einer Schicht des Aufbaumaterials zu richten, dass durch das Energiestrahlbündel eine Verfestigung des Aufbaumaterials bewirkt wird, und
eine Gasflusseinrichtung, die geeignet ist, über den Auftreffort eines Energiestrahlbündels einen Gasstrom zu leiten,
wobei die generative Schichtbauvorrichtung so ausgelegt ist, dass sie ein generatives Schichtbauverfahren ausführen kann.

Ein erfindungsgemäßes Computerprogramm umfasst Programmcodemittel, um alle Schritte eines erfindungsgemäßen Verfahrens zur Bereitstellung von Steuerdaten oder eines erfindungsgemäßen generativen Schichtbauverfahrens auszuführen, wenn das Computerprogramm auf einem Datenprozessor, insbesondere einem mit einer generativen Schichtbauvorrichtung zusammenwirkenden Datenprozessor, ausgeführt wird. "Zusammenwirken" heißt dabei, dass der Datenprozessor entweder in die generative Schichtbauvorrichtung integriert ist oder mit ihr Daten austauschen kann.

Die Implementierung des erfindungsgemäßen Verfahrens zur Bereitstellung von Steuerdaten sowie der zugehörigen Vorrichtung mittels Software ermöglicht eine einfache Installierbarkeit auf verschiedenen EDV-Systemen an verschiedenen Orten (beispielsweise beim Ersteller des Designs des zu bearbeitenden Objekts oder aber beim Betreiber der generativen Schichtbauvorrichtung).

Weitere Merkmale und Zweckmäßigkeiten der Erfindung ergeben sich aus der Beschreibung von Ausführungsbeispielen anhand der beigefügten Zeichnungen.
- Fig. 1: zeigt eine schematische, teilweise im Schnitt dargestellte Ansicht einer beispielhaften Vorrichtung zum generativen Herstellen eines dreidimensionalen Objekts gemäß einer Ausführungsform der Erfindung,
- Fig. 2: zeigt schematisch einen Schnitt durch einen Abschnitt eines Objekts während seiner Herstellung zur Veranschaulichung der unterschiedlichen Bereiche eines Objektquerschnitts,
- Fig. 3: zeigt eine schematische Draufsicht auf einen beispielhaften Objektquerschnitt zur Veranschaulichung des Vorgehens,
- Fig. 4: zeigt eine schematische Draufsicht auf einen beispielhaften Objektquerschnitt zur Veranschaulichung des Vorgehens bei Vorhandensein eines Gasstroms über dem Baufeld,
- Fig. 5: veranschaulicht schematisch eine Variante des Vorgehens bei Vorhandensein eines Gasstroms über dem Baufeld,
- Fig. 6: zeigt eine schematische Draufsicht auf einen beispielhaften Objektquerschnitt zur Veranschaulichung der Variante des Vorgehens bei Vorhandensein eines Gasstroms über dem Baufeld,
- Fig. 7: veranschaulicht den Ablauf eines Verfahrens zur Bereitstellung von Steuerdaten,
- Fig. 8: zeigt den schematischen Aufbau einer Vorrichtung zur Bereitstellung von Steuerdaten,
- Fig. 9: veranschaulicht schematisch die Ausrichtung der Bewegungsrichtung eines Strahlbündels nach der Hauptströmungsrichtung des Gasstroms,
- Fig. 10a und 10b: veranschaulichen schematisch mögliche Vorgehensweisen beim Abtasten des Aufbaumaterials in einem Belichtungsbereich, und
- Fig. 11: veranschaulicht die Ausrichtung der Vorschubrichtung der Scanlinien innerhalb eines Belichtungsbereichs nach der Hauptströmungsrichtung des Gasstroms.

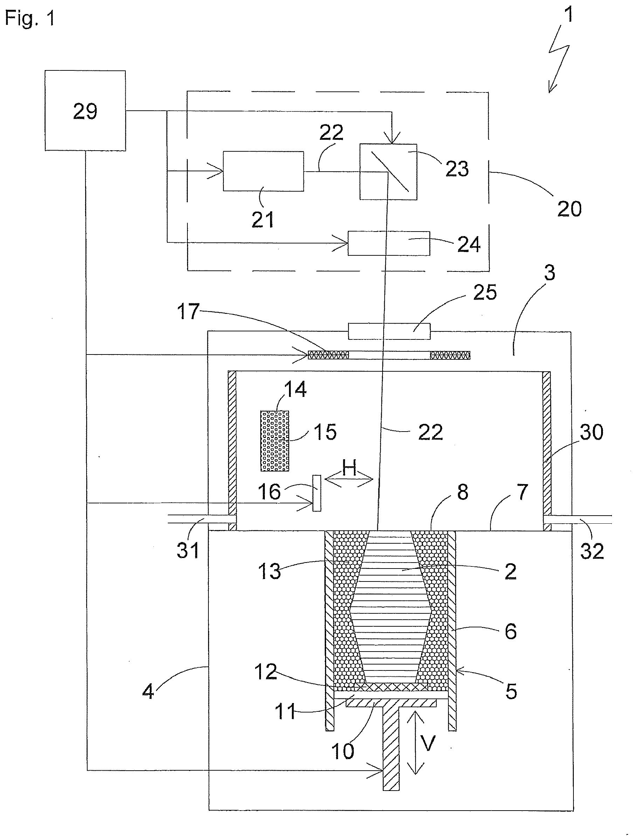

Für eine Beschreibung der Erfindung soll zunächst nachfolgend am Beispiel einer Lasersinter- oder -schmelzvorrichtung eine generative Schichtbauvorrichtung unter Bezugnahme auf Fig. 1 beschrieben werden. Es sei an dieser Stelle vermerkt, dass in der vorliegenden Anmeldung der Begriff "Anzahl" stets im Sinne von "ein oder mehrere" zu verstehen ist.

Zum Aufbauen eines Objekts 2 enthält die Lasersinter- oder Laserschmelzvorrichtung 1 eine Prozesskammer oder Baukammer 3 mit einer Kammerwandung 4. In der Prozesskammer 3 ist ein nach oben offener Baubehälter 5 mit einer Behälterwandung 6 angeordnet. Durch die obere Öffnung des Baubehälters 5 ist eine Arbeitsebene 7 definiert, wobei der innerhalb der Öffnung liegende Bereich der Arbeitsebene 7, der zum Aufbau des Objekts 2 verwendet werden kann, als Baufeld 8 bezeichnet wird.

In dem Baubehälter 5 ist ein in einer vertikalen Richtung V bewegbarer Träger 10 angeordnet, an dem eine Grundplatte 11 angebracht ist, die den Behälter 5 nach unten abschließt und damit dessen Boden bildet. Die Grundplatte 11 kann eine getrennt von dem Träger 10 gebildete Platte sein, die an dem Träger 10 befestigt ist, oder sie kann integral mit dem Träger 10 ausgebildet sein. Je nach verwendetem Pulver und Prozess kann auf der Grundplatte 11 noch eine Bauplattform 12 als Bauunterlage angebracht sein, auf der das Objekt 2 aufgebaut wird. Das Objekt 2 kann aber auch auf der Grundplatte 11 selber aufgebaut werden, die dann als Bauunterlage dient. In Fig. 1 ist das in dem Behälter 5 auf der Bauplattform 12 zu bildende Objekt 2 unterhalb der Arbeitsebene 7 in einem Zwischenzustand dargestellt mit mehreren verfestigten Schichten, umgeben von unverfestigt gebliebenem Aufbaumaterial 13.

Die Lasersinter- oder -schmelzvorrichtung 1 enthält weiterhin einen Vorratsbehälter 14 für ein Aufbaumaterial 15, in diesem Beispiel ein durch elektromagnetische Strahlung verfestigbares Pulver, und einen in einer horizontalen Richtung H bewegbaren Beschichter 16 zum Aufbringen des Aufbaumaterials 15 innerhalb des Baufelds 8. Optional kann in der Prozesskammer 3 eine Heizvorrichtung, z.B. eine Strahlungsheizung 17 angeordnet sein, die zum Beheizen des aufgebrachten Aufbaumaterials dient. Als Strahlungsheizung 17 kann beispielsweise ein Infrarotstrahler vorgesehen sein.

Die beispielhafte generative Schichtbauvorrichtung 1 enthält ferner eine Belichtungsvorrichtung 20 mit einem Laser 21, der einen Laserstrahl 22 erzeugt, der über eine Umlenkvorrichtung 23 umgelenkt wird und durch eine Fokussiervorrichtung 24 über ein Einkoppelfenster 25, das an der Oberseite der Prozesskammer 3 in der Kammerwandung 4 angebracht ist, auf die Arbeitsebene 7 fokussiert wird.

Weiter enthält die Lasersintervorrichtung 1 eine Steuereinrichtung 29, über die die einzelnen Bestandteile der Vorrichtung 1 in koordinierter Weise zum Durchführen des Bauprozesses gesteuert werden. Alternativ kann die Steuereinrichtung auch teilweise oder ganz außerhalb der Vorrichtung angebracht sein. Die Steuereinrichtung kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es (z.B. über ein Netzwerk) in die Vorrichtung, insbesondere in die Steuereinrichtung geladen werden kann.

Ferner enthält die Lasersintervorrichtung 1 optional eine Beströmungsvorrichtung 30 mit einer Gaszufuhr 31 und einer Gasabfuhr 32 zum Erzeugen eines Gasflusses über das Baufeld.

Im Betrieb wird durch die Steuereinrichtung 29 der Träger 10 Schicht für Schicht abgesenkt, der Beschichter 16 zum Auftrag einer neuen Pulverschicht angesteuert und die Umlenkvorrichtung 23 und gegebenenfalls auch der Laser 21 und/oder die Fokussiervorrichtung 24 angesteuert zum Verfestigen der jeweiligen Schicht an den dem jeweiligen Objekt entsprechenden Stellen mittels des Lasers durch Abtasten dieser Stellen mit dem Laser.

Beim Lasersintern oder Laserschmelzen kann eine Belichtungsvorrichtung beispielsweise einen oder mehrere Gas- oder Festkörperlaser oder jede andere Art von Laser wie z.B. Laserdioden, insbesondere VCSEL (Vertical Cavity Surface Emitting Laser) oder VECSEL (Vertical External Cavity Surface Emitting Laser), oder eine Zeile dieser Laser umfassen. Der in Fig. 1 gezeigte spezifische Aufbau einer Lasersinter- oder -schmelzvorrichtung ist daher für die vorliegende Erfindung nur beispielhaft und kann natürlich auch abgewandelt werden, insbesondere bei Verwendung einer anderen Belichtungsvorrichtung als der gezeigten.

Alle im weiteren Verlauf gemachten Ausführungen gelten entsprechend nicht nur für Lasersinter- oder -schmelzvorrichtungen, sondern auch für anders geartete generative Schichtbauvorrichtungen.

Als Aufbaumaterial in einem generativen Schichtbauverfahren können verschiedene Materialien verwendet werden, vorzugsweise Pulver oder Pasten bzw. Gele, insbesondere Metallpulver, aber auch Kunststoffpulver, Keramikpulver oder Sand, wobei auch die Verwendung von gefüllten oder gemischten Pulvern möglich ist. Insbesondere in der Stereolithographie kommen (flüssige) Photopolymere zum Einsatz.

In der soeben beispielhaft beschriebenen generativen Schichtbauvorrichtung geht ein Herstellvorgang so vonstatten, dass die Steuereinheit 29 einen Steuerdatensatz (oft auch als Steuerbefehlssatz bezeichnet) abarbeitet. Das Vorgehen wird nachfolgend beispielhaft unter Bezugnahme auf die Figuren beschrieben.

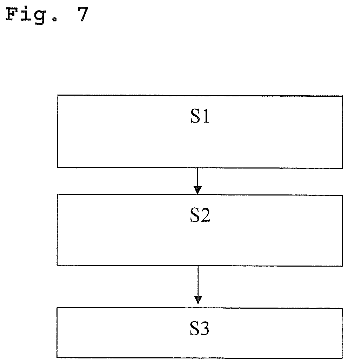

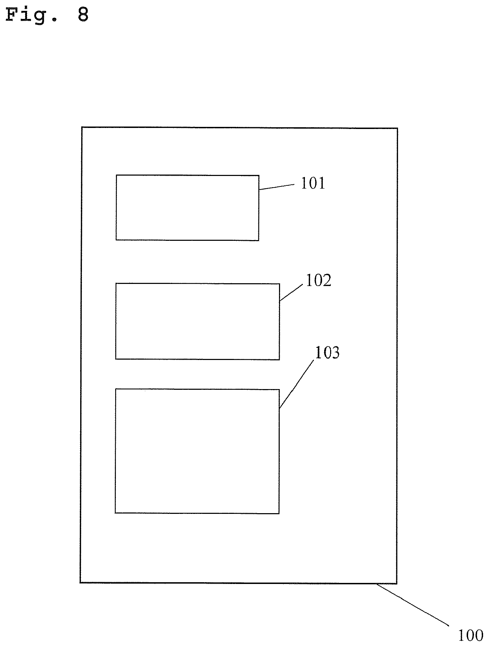

Wie in Figur 8 gezeigt, enthält eine Vorrichtung 100 zur Bereitstellung von Steuerdaten für eine generative Schichtbauvorrichtung eine Zugriffseinheit 101, eine Festlegungseinheit 102 und eine Bereitstellungseinheit 103. Die Funktionsweise der Vorrichtung 100 zur Bereitstellung von Steuerdaten wird unter Bezugnahme auf Figur 7 beschrieben. Die übrigen Figuren dienen dabei der weiteren Veranschaulichung.

In der in Fig. 8 gezeigten Vorrichtung 100 zur Bereitstellung von Steuerdaten für eine generative Schichtbauvorrichtung greift zunächst die Zugriffseinheit 101 auf eine Mehrzahl von Schichtdatensätzen des herzustellenden Objekts zu. In dem in Fig. 7 gezeigten Verfahrensablauf ist dies der Schritt 51.

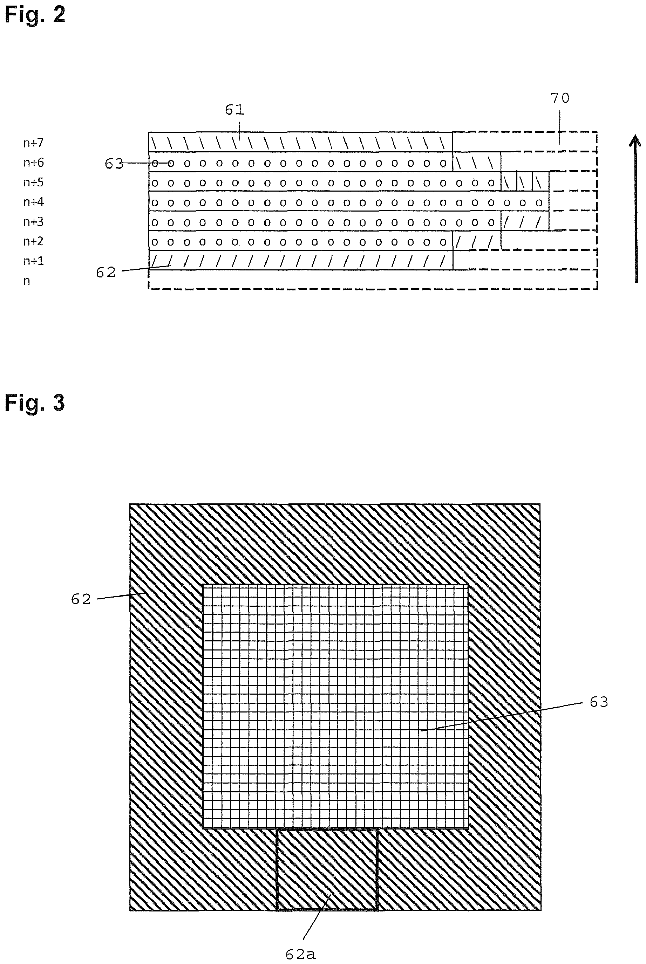

Für die vorliegende Erfindung wird angenommen, dass ein Schichtdatensatz bereits Informationen darüber enthält, ob Bereiche in der dem Schichtdatensatz zugeordneten Aufbaumaterialschicht oberhalb oder unterhalb von unverfestigt zu bleibendem Aufbaumaterial liegen. Dies wird im Folgenden anhand von Figur 2 erläutert. Diese zeigt eine Seitenansicht eines durch ein generatives Schichtbauverfahren hergestellten Objektabschnitts ähnlich der Seitenansicht auf das Objekt 2 in Fig. 1. Der in Fig. 2 gezeigte Objektabschnitt weist sieben Querschnitte in den Schichten n+1 bis n+7 auf, wobei der Pfeil rechts im Bild die Richtung anzeigt, in der der Objektabschnitt Schicht auf Schicht aufgebaut wird ("z-Richtung" bei einer Übertragung des Bauvolumens in ein Koordinatensystem). In allen Schichten ist jeweils die Region 70, in der das Aufbaumaterial unverfestigt bleibt, ohne Füllung und mit einer gestrichelten Umrandungslinie dargestellt.

Weiterhin erkennt man in Fig. 2 sogenannte Bodenflächenbereiche 62 (im Fachjargon oftmals auch als Downskin-Bereiche bezeichnet). Dabei handelt es sich um Bereiche eines Objektquerschnitts, welche während der Objektherstellung oberhalb von Aufbaumaterial liegen, das unverfestigt bleibt. Die Bodenflächenbereiche 62 entsprechen also Oberflächenbereichen des Objekts, die während dessen Herstellung nach unten (zum Träger 10 hin) zeigen. Die Bodenflächenbereiche 62 sind in Fig. 2 durch Schrägstriche "/" gekennzeichnet.

Fig. 2 zeigt ebenfalls durch Gegenschrägstriche "\" gekennzeichnete Regionen 61. Dabei handelt es sich um Bereiche eines Objektquerschnitts, welche unmittelbar nach der Objektherstellung von unverfestigt gebliebenem Aufbaumaterial bedeckt sind. Entsprechend werden die Regionen 61 als Deckflächenbereiche bezeichnet (im Fachjargon oftmals auch als Upskin-Bereiche bezeichnet), da es sich um Oberflächenbereiche des herzustellenden Objekts handelt, die während dessen Herstellung nach oben (vom Träger 10 weg gerichtet) zeigen.

Schließlich zeigt Fig. 2 noch mit Kreisen "O" gekennzeichnete Regionen 63. Dabei handelt es sich um Bereiche eines Objektquerschnitts, oberhalb und unterhalb von denen das Aufbaumaterial zu verfestigen ist, weshalb die Regionen 63 als Sandwich-Regionen bezeichnet werden.

Indem in einem Schichtdatensatz unterschiedliche Regionen 61, 62, 63 gekennzeichnet sind, ist es möglich, für alle Stellen in einer Region jeweils in im Wesentlichen gleicher Weise bei der Herstellung, insbesondere der Verfestigung, vorzugehen. Beispielsweise können Energieeintragsparameter, wie z.B. die Energiedichte der Strahlung oder der mittlere Durchmesser des Strahl(bündel)s beim Auftreffen auf das Aufbaumaterial einheitlich für eine Region festgelegt werden. Dadurch kann man z.B. für Bodenflächenbereiche einheitlich einen im Vergleich zu Sandwich-Regionen niedrigeren Energieeintrag vorgeben.

Es sei erwähnt, dass Fig. 2 Konturbereiche eines Objektquerschnitts, insbesondere die normalerweise durch Verfahren eines Strahls entlang des Randes eines Objektquerschnitts zu verfestigende Kontur eines Objektquerschnitts, nicht explizit zeigt. Diese Konturbereiche eines Objektquerschnitts können zwar ebenfalls Bestandteil eines Bodenflächenbereichs, eines Deckflächenbereichs oder einer Sandwich-Region sein, die vorliegende Erfindung bezieht sich jedoch ausschließlich auf Nichtkonturbereiche.

Falls die Mehrzahl von Schichtdatensätzen, auf die die Zugriffseinheit 101 zugreift, keine Informationen darüber enthält, ob Bereiche in den den Schichtdatensätzen jeweils zugeordneten Aufbaumaterialschichten oberhalb oder unterhalb von unverfestigt zu bleibendem Aufbaumaterial liegen, dann kann diese Information vor Durchführung des Verfahrens den Schichtdatensätzen hinzugefügt werden. Beispielsweise kann dies durch die Vorrichtung 100 selbst geschehen.

In einem in Fig. 7 gezeigten Schritt S2 wird durch die Schichtdatensatz-Abänderungseinheit 102 ein Schichtdatensatz dergestalt abgeändert, dass eine zeitliche Reihenfolge für die Abtastung des zugehörigen Objektquerschnitts mit Energiestrahlung festgelegt wird. Dies wird anhand von Fig. 3 näher erläutert, welche eine Draufsicht auf einen beispielhaften Objektquerschnitt zeigt und somit eine "x-/y-Richtung" bzw. eine horizontale Ebene bei einer Übertragung des Bauvolumens in ein Koordinatensystem. Beispielsweise kann sie eine Draufsicht auf die Schicht n+2 von Fig. 2 vor dem Auftragen des Aufbaumaterials der Schicht n+3 zeigen.

Der lediglich beispielhaft quadratische Objektquerschnitt von Fig. 3 besteht aus einem Bodenflächenbereich 62 und einer Sandwich-Region 63. Die Schichtdatensatz-Abänderungseinheit 102 spezifiziert in dem Schichtdatensatz, der ein Datenmodell des in Fig. 3 gezeigten Objektquerschnitts aufweist, dass der Abschnitt 62a des Bodenflächenbereichs 62 zeitlich vor der Sandwich-Region 63 zu verfestigen ist. Ein Grund für das zeitliche Vorziehen des Abschnitts 62a kann darin liegen, dass die Bodenfläche im Abschnitt 62a besonders ebenmäßig verfestigt werden muss, z. B. weil das Objekt bei seiner Verwendung an dieser Stelle plan aufliegen muss oder weil es dort eine besonders glatte Oberfläche aufweisen soll. Durch das Vorziehen des Abschnitts 62a wird hier erreicht, dass Verunreinigungen, die bei der Verfestigung der Sandwich-Region 63 auftreten können, nicht in den Bereich des Abschnitts 62a gelangen können und dort zu einer inhomogenen Verfestigung führen können. Darüber hinaus können während des Verfestigungsvorgangs der Sandwich-Region 63 entstehende Prozessgase (Rauch, etc.) nur in geringem Maße sich im Abschnitt 62a niederschlagen und dort zu Inhomogenitäten führen, wenn dieser vor der Sandwich-Region 63 (und bevorzugt auch vor den übrigen Abschnitten des Bodenflächenbereichs 62) verfestigt wird. Da allgemein die Oberflächen eines Bodenflächenbereichs tendenziell mehr Inhomogenitäten zeigen, wird bei einer Weiterbildung der Erfindung der gesamte Bodenflächenbereich eines Objektquerschnitts vor der Sandwich-Region verfestigt, bevorzugt in allen Aufbaumaterialschichten, die einen Bodenflächenbereich enthalten.

Wenn in dem Datenmodell einer Aufbaumaterialschicht Deckflächenbereiche 61 vorhanden sind, so können diese analog zu den Bodenflächenbereichen behandelt werden. Fig. 3 ist auf diesen Fall anwendbar, wenn man den Bodenflächenbereich 62 durch einen Deckflächenbereich 61 ersetzt und den Abschnitt 62a durch einen Abschnitt 61a eines Deckflächenbereichs.

Auch im Falle der Deckflächenbereiche wird also festgelegt, dass der Abschnitt 61a des Deckflächenbereichs 62 oder sogar der gesamte Deckflächenbereich zeitlich vor der Sandwich-Region 63 zu verfestigen ist. Falls in dem Datenmodell einer Aufbaumaterialschicht sowohl Bodenflächenbereiche als auch Deckflächenbereiche vorhanden sind, dann hängt es davon ab, ob im Abschnitt 61a des Deckflächenbereichs oder im Abschnitt 62a des Bodenflächenbereichs eine größere Homogenität und/oder Genauigkeit erforderlich ist, ob zuerst der Abschnitt 61a oder der Abschnitt 62a zu verfestigen ist. Erfahrungsgemäß sollten Abschnitte von Bodenflächenbereichen zeitlich vor Abschnitten von Deckflächenbereichen verfestigt werden.

In einem in Fig. 7 gezeigten Schritt S3 wird schließlich durch die Schichtdatensatz-Bereitstellungseinheit 103 der im Schritt S2 abgeänderte Schichtdatensatz für die Generierung eines Steuerdatensatzes bereitgestellt.

Nachfolgend werden Abwandlungen des soeben beschriebenen Vorgehens beschrieben. Auch wenn diese Abwandlungen nachfolgend am Beispiel von Bodenflächenbereichen beschrieben werden, so sind sie in gleicher Weise auch für Deckflächenbereiche anwendbar.

Das zeitliche Vorziehen der Verfestigung von Abschnitten von Bodenflächen- und/oder Deckflächenbereichen ist insbesondere dann von Vorteil, wenn die bereits weiter oben erwähnte optionale Beströmungsvorrichtung 30 in der generativen Schichtbauvorrichtung zum Einsatz kommt. Mittels dieser wird eine Gasströmung über dem Baufeld 8 erzeugt, durch welche während des Auftreffens eines Strahl(bündel)s auf das Aufbaumaterial entstehender Rauch und Dämpfe entfernt werden sollen. Hierbei wird im Folgenden angenommen, dass durch die Gaszufuhr 31 und die Gasabfuhr 32 eine Hauptströmungsrichtung RG, mit der das Gas über das Baufeld 8 strömt, vorgegeben wird, auch wenn dies nicht zwingend so sein muss.

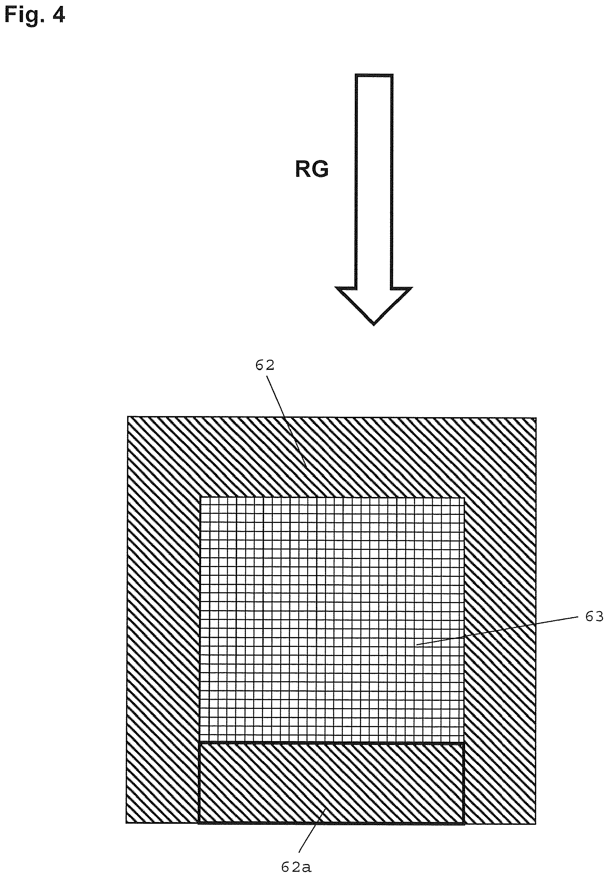

Wenn eine Gasströmung über dem Baufeld 8 vorhanden ist, dann bewegen sich Rauch und Dämpfe, die bei der Verfestigung des Aufbaumaterials entstehen, hauptsächlich in der Hauptströmungsrichtung RG. Bei einer Weiterbildung der Erfindung wird dies beim Festlegen der zeitlichen Reihenfolge der Verfestigung einer Aufbaumaterialschicht berücksichtigt, wie in Fig. 4 veranschaulicht ist.

Fig. 4, welche analog zu Fig. 3 eine Draufsicht auf einen beispielhaften Objektquerschnitt zeigt, zeigt ebenfalls die durch einen nach unten weisenden Pfeil veranschaulichte Hauptströmungsrichtung RG. Dies wird bei der Festlegung der zeitlichen Reihenfolge im Schritt S2 dadurch berücksichtigt, dass der Abschnitt 62a des Bodenflächenbereichs 62, der zeitlich vor der Sandwich-Region 63 zu verfestigen ist, so gewählt wird, dass er alle Stellen des Bodenflächenbereichs umfasst, die bezogen auf die Hauptströmungsrichtung RG gegenüber der Sandwich-Region 63 stromabwärts liegen, wie in Fig. 4 gezeigt.

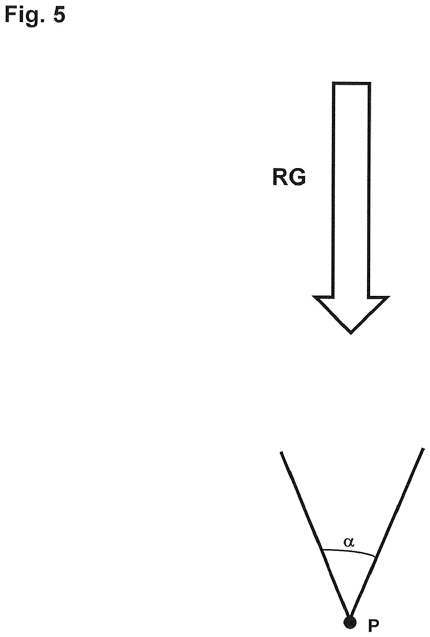

Bei einer Weiterbildung der soeben beschriebenen Variante wird berücksichtigt, dass sich Rauch und Dämpfe, die bei der Verfestigung des Aufbaumaterials entstehen, nicht ausschließlich in der Hauptströmungsrichtung RG bewegen. Dies ist in Fig. 5 veranschaulicht. Diese zeigt eine beispielhafte Stelle einer Schicht des Aufbaumaterials, an welcher dieses zu verfestigen ist. Rauch und Dämpfe können nicht nur in der Hauptströmungsrichtung RG zu der Stelle P gelangen, sondern ebenfalls aus Richtungen innerhalb eines Winkelbereichs α um die Richtung herum, aus der der Gasstrom kommt (die entgegengesetzte Richtung zur Hauptströmungsrichtung RG).

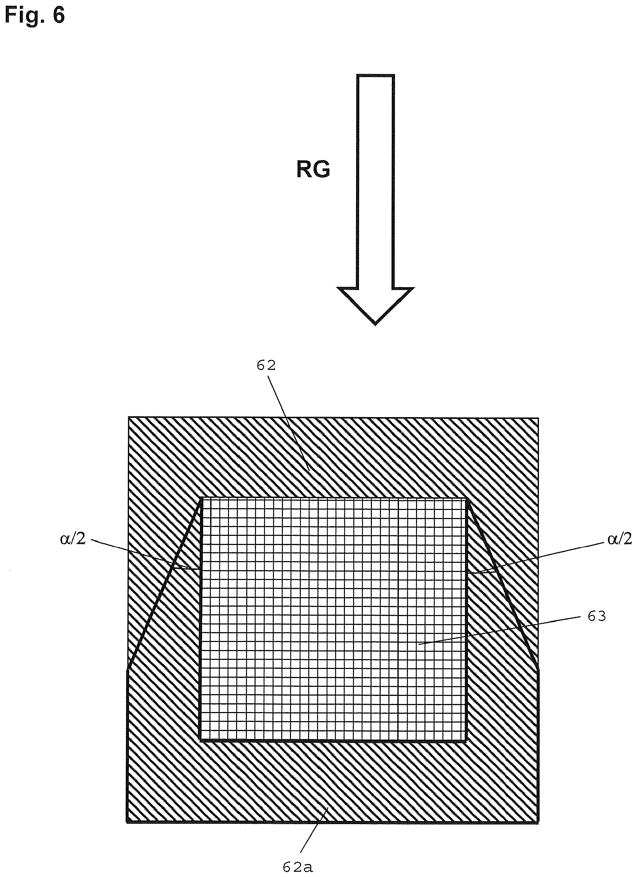

Wie in Fig. 6 veranschaulicht, wird bei der Weiterbildung der Variante bei der Festlegung der zeitlichen Reihenfolge im Schritt S2 entsprechend berücksichtigt, dass der Abschnitt 62a des Bodenflächenbereichs 62, der zeitlich vor der Sandwich-Region 63 zu verfestigen ist, so gewählt wird, dass er alle Stellen des Bodenflächenbereichs umfasst, bei denen es außerhalb des Bodenflächenbereichs 62 (also in der Sandwich-Region) liegende Stellen des Objektquerschnitts gibt, die innerhalb eines vorgegebenen Winkelbereichs α um die Richtung herum, aus der der Gasstrom kommt, weiter stromaufwärts liegen. Man erkennt insbesondere, dass die den Abschnitt 62a entgegen der Hauptströmungsrichtung RG begrenzende Randlinie links und rechts der Sandwich-Region 63 jeweils einen Winkel α/2 mit der Hauptströmungsrichtung RG einschließt.

Der Winkelbereich wird in Abhängigkeit von der Art des verwendeten Pulvers, der durch das oder die Strahlbündel in das Aufbaumaterial einzutragenden Energiemenge, der Strömungsgeschwindigkeit des Gases und anderen Betriebsparametern der Vorrichtung vorgegeben. Die Erfinder haben festgestellt, dass sich im Allgemeinen akzeptable Resultate für die erhaltene Qualität eines Objekts erzielen lassen, wenn als Winkelbereich ein Bereich zwischen -22,5° und +22,5° um die Richtung herum, aus der der Gasstrom kommt, vorgegeben wird (α/2=22,5°). Die Gefahr von Inhomogenitäten im Boden-/Deckflächenbereich sinkt mit zunehmendem Winkelbereich, so dass z. B. bei Vorgabe eines Bereichs zwischen -90° und +90° um die Richtung herum, aus der der Gasstrom kommt, oder sogar eines Bereichs zwischen -112,5° und +112,5° die Gefahr von Inhomogenitäten geringer ist.

Natürlich können Rauch und Dämpfe in einen vor der Sandwich-Region 63 zu verfestigenden Abschnitt 62a eines Bodenflächenbereichs 62 auch dann gelangen, wenn außerhalb des Abschnitts 62a liegende Stellen des Bodenflächenbereichs 62 mit einem Strahl(bündel) abgetastet werden. Bevorzugt wird daher im Schritt S2 festgelegt, dass der Abschnitt 62a nicht nur vor der Sandwich-Region 63, sondern auch vor allen anderen Stellen des Bodenflächenbereichs 62 zu verfestigen ist. Dies gilt unabhängig davon, ob eine Gasströmung über das Baufeld 8 geleitet wird.

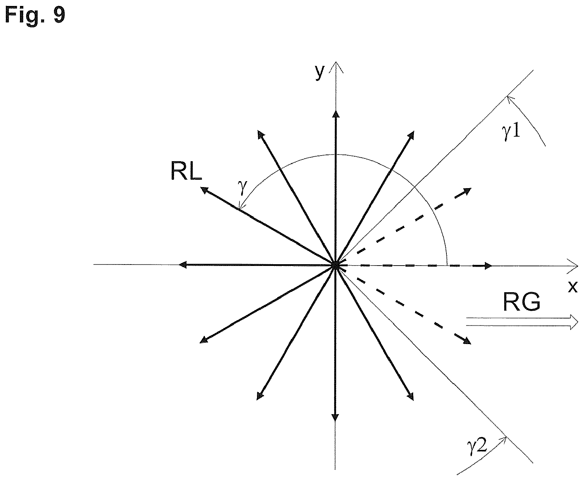

Weiterhin lässt sich die Homogenität der Verfestigung des Aufbaumaterials in einem Boden- oder Deckflächenbereich (und natürlich auch in einer Sandwich-Region) dadurch verbessern, dass ein Energiestrahlbündel möglichst so über das Aufbaumaterial bewegt wird, dass beim Auftreffen der Strahlung auf das Aufbaumaterial entstehende Dämpfe und Rauch möglichst nicht zu jenen Stellen gelangen, die als Nächstes zu verfestigen sind. Fig. 9 zeigt zur Veranschaulichung eine Draufsicht auf das Baufeld 8 zusammen mit einem Koordinatensystem. Die Hauptströmungsrichtung RG des Gasstroms geht dabei in die positive x-Richtung. Weiterhin sind verschiedene Abtastrichtungen RL, also Bewegungsrichtungen, in denen ein Strahlbündel über das Aufbaumaterial bewegt wird, gezeigt. Diese Abtastrichtungen RL bilden jeweils mit der positiven x-Achse, also mit der Hauptströmungsrichtung RG, im mathematisch positiven Sinn einen Winkel γ, der von 0 bis 360° gehen kann (0°≤γ≤360°). Sehr gute Ergebnisse hinsichtlich der Homogenität des verfestigten Aufbaumaterials lassen sich erzielen, wenn der Abtastrichtung RL und die Hauptströmungsrichtung RG in der Draufsicht auf die Arbeitsebene gesehen einen Winkel γ bilden, der zwischen 90° und 270° liegt (90°≤γ≤270°). In diesem Fall hat der Vektor der Bewegung des Strahlbündels in der Abtastrichtung RL keine Komponente, die in die Hauptströmungsrichtung RG zeigt.

Aber auch bei Winkeln γ kleiner als 90° oder größer als 270°, bei denen der Vektor der Bewegung des Strahlbündels eine Komponente aufweist, die in die Hauptströmungsrichtung RG zeigt, kann noch eine gute Homogenität erzielt werden, solange die Komponente senkrecht zur Abtastrichtung RL groß genug ist, Rauch und Dämpfe von den als Nächstes abzutastenden Stellen wegzuhalten. Der bevorzugte Arbeitsbereich (Abtastvektoren bzw. Scanlinien in Fig. 3 durchgezogen dargestellt) liegt zwischen den beiden Grenzwinkeln y1 und y2 (γ1≤γ≤γ2). Abtastrichtungen RL zwischen 0° und y1 oder zwischen y2 und 360° (beispielhafte nachteilige Abtastrichtungen in Fig. 9 gestrichelt dargestellt) sollten vermieden werden. Die Grenzwinkel hängen von der Art des verwendeten Pulvers, den eingestellten Laserleistungen, der eingestellten Strömungsgeschwindigkeit des Gases und anderen Betriebsparametern der Vorrichtung ab. Im Allgemeinen lässt sich eine genügende Verbesserung der Objekthomogenität erzielen, wenn der Winkel γ zwischen der Abtastrichtung RL und der Hauptströmungsrichtung RG in der Draufsicht auf das Baufeld 8 zwischen 22,5° und 337,5° (22,5°≤γ≤337,5°) liegt. Vorzugsweise wird ein Bereich gewählt, der zwischen 45° und 315° (45°≤γ≤315°) liegt, in weiter bevorzugter Weise zwischen 60° und 300° (60°≤γ≤300°), in noch weiter bevorzugter Weise zwischen 90° und 270° (90°≤γ≤270°). In Fig. 9 ist als Beispiel ein Fall gezeigt, bei dem die Grenzwinkel y1 und y2 zu γ1=45° und y2=315° gewählt sind.

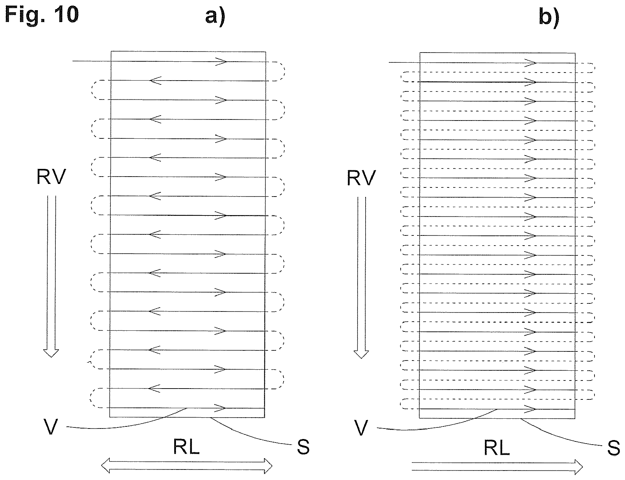

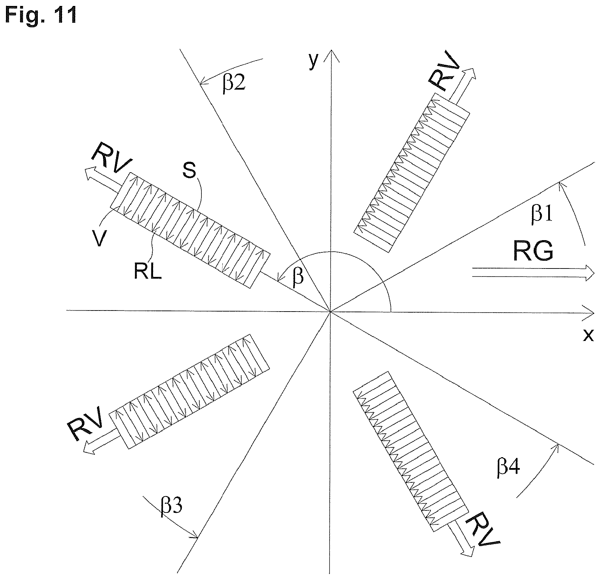

Die bislang im Rahmen der Erfindung beschriebenen Vorgehensweisen sind unabhängig davon anwendbar, mit welchem Bewegungsmuster ein Strahlbündel über die Aufbaumaterialschicht zum Abtasten derselben geführt wird. Besondere Vorteile können sich jedoch ergeben, wenn zusätzlich das Bewegungsmuster berücksichtigt wird. Dies wird nachfolgend anhand der Figuren 10 und 11 erläutert.

Hierbei werden einem zu verfestigenden Abschnitt eines Objektquerschnitts Belichtungsbereiche zugeordnet, der Abschnitt sozusagen in Belichtungsbereiche unterteilt, die in der Regel rechteckig oder quadratisch sind. In diesen Belichtungsbereichen wird das Aufbaumaterial jeweils durch Abtasten mit einem oder mehreren Strahlbündeln, die in vorzugsweise zueinander parallelen Scanlinien bewegt werden, verfestigt. Das Vorgehen bei solch einer bereichsweisen Verfestigung zeigen beispielhaft Fig. 10a und 10b.

Fig. 10a und 10b zeigen in einer Draufsicht auf das Baufeld zwei verschiedene Varianten für die Abtastung eines (im Beispiel rechteckigen) Belichtungsbereichs S. Bei beiden Varianten wird ein Strahlbündel innerhalb des Belichtungsbereichs S in zueinander parallelen Scanlinien (im Fachjargon auch Hatches genannt) V über die Aufbaumaterialschicht bewegt, wobei die Scanlinien im Wesentlichen senkrecht zu der Längsausdehnung der Belichtungsbereiche liegen. Bei der Verfestigung des Aufbaumaterials in einem Belichtungsbereich S ergibt sich ein Fortschreiten des durch das Strahlbündel verfestigten Bereichs in einer Vorschubrichtung RV, die im Beispiel auf den Scanlinien senkrecht steht und die Richtung ist, in der die Scanlinien V nacheinander belichtet werden.

In Fig. 10a sind die Abtastrichtungen RL, in denen zwei benachbarte Scanlinien V mit dem Strahlbündel abgetastet werden, einander entgegengesetzt. Die Umkehrbereiche bei der Bewegung des Strahlbündels sind in Fig. 10a gestrichelt dargestellt und liegen außerhalb des Belichtungsbereichs S. Das Strahlbündel ist in den Umkehrbereichen ausgeschaltet oder ausgeblendet, und/oder die Abtastung durch das Strahlbündel erfolgt an diesen Stellen mit einer erhöhten Geschwindigkeit, die so groß bzw. mit einer Energiedichte, die so gering ist, dass der Energieeintrag durch das Strahlbündel nicht zum Verfestigen des Aufbaumaterials ausreicht.

In Fig. 10b sind die Abtastrichtungen RL, in denen zwei benachbarte Scanlinien V mit dem Strahlbündel abgetastet werden, gleich. Das Strahlbündel bleibt nach der Umkehr der Bewegungsrichtung solange ausgeschaltet, bis es wieder die Ausgangsseite des Belichtungsbereichs erreicht hat. Wiederum ist die Abschaltung des Strahlbündels während der Bewegung durch eine gestrichelte Linie gekennzeichnet.

Die Erfinder haben erkannt, dass eine bereichsweise Abtastung bei den Bodenflächenbereichen und Deckflächenbereichen von Vorteil für eine verbesserte Objektqualität ist. Die Erfinder schreiben dies dem Umstand zu, dass ein z. B. rechteckiger oder quadratischer Belichtungsbereich mit gleich langen parallelen Scanlinien abgetastet werden kann. Ohne die Einführung von Belichtungsbereichen können die Längen der Scanlinien sehr unterschiedlich sein, was lokal zu einem zu hohen oder zu niedrigen Energieeintrag und damit zu inhomogener Verfestigung führen kann.

Werden einem Boden- oder Deckflächenbereich (und natürlich auch einer Sandwich-Region) Belichtungsbereiche zugeordnet, so lässt sich noch zusätzlich eine Verbesserung der Objektqualität (z. B. der Homogenität) erzielen, wenn in der generativen Schichtbauvorrichtung eine Beströmungsvorrichtung 30 zum Einsatz kommt und die Vorschubrichtung RV, in der die Verfestigung des Aufbaumaterials innerhalb eines Belichtungsbereichs voranschreitet, auf die Hauptströmungsrichtung RG abgestimmt wird. Dies wird nachfolgend anhand von Fig. 11 erläutert.

Fig. 11 ist ähnlich wie Fig. 9 eine schematische Draufsicht auf das Baufeld 8. Wie in Fig. 11 zeigt die Hauptströmungsrichtung RG des Gasstroms dabei in die positive x-Richtung des Koordinatensystems. Weiterhin ist beispielhaft für verschiedene Vorschubrichtungen RV jeweils ein einzelner Belichtungsbereich S mit den darin enthaltenen Scanlinien V gezeigt. Die Vorschubrichtungen RV bilden jeweils mit der positiven x-Achse, also mit der Hauptströmungsrichtung RG, im mathematisch positiven Sinn einen Winkel β, der von 0 bis 360° gehen kann (0°≤β≤360°). In diesem Fall gibt es vier Grenzwinkel, die die Beziehung β1<β2<β3<β4 erfüllen, wobei die Bereiche zwischen 0° und β1 und zwischen β4 und 360° vermieden werden sollten.

Damit der Winkel γ (siehe Fig. 9) zwischen den Abtastrichtungen RL der Scanlinien V und der Hauptströmungsrichtung RG immer die weiter oben im Zusammenhang mit Fig. 9 spezifizierten Bereiche einhalten kann, sollte, falls benachbarte Scanlinien immer entgegengesetzt durchlaufen werden (siehe Fig. 10a), für den Winkel β der Bereich zwischen den beiden Grenzwinkeln β2 und β3 (β2≤β≤β3) gewählt werden, insbesondere ein Bereich zwischen β2=112,5° und β3=247,5° (112,5°≤β≤247,5°), vorzugsweise zwischen β2=135° und β3=225° (135°≤β≤225°), in weiter bevorzugter Weise zwischen β2=150° und β3=210° (150°≤β≤210°).

Falls benachbarte Scanlinien immer in die gleiche Richtung zeigen (siehe Fig. 10b) und ihre Abtastrichtungen RL und die Hauptströmungsrichtung einen Winkel zueinander aufweisen, der größer oder gleich 90° ist, dann sind die beiden Bereiche zwischen den Grenzwinkeln β1 und β2 (β1≤β≤β2) und zwischen den Grenzwinkeln β3 und β4 (β3≤β≤β4) ebenfalls gut geeignet. Der Wert des Grenzwinkels β1 sollte bevorzugt zu 22,5° gewählt werden, bevorzugter zu 45° und noch bevorzugter zu 60°. Der Wert des Grenzwinkels β4 sollte bevorzugt zu 337,5°, bevorzugter zu 315° und noch bevorzugter zu 300° gewählt werden.

Abschließend sei noch erwähnt, dass eine Vorrichtung 100 zur Bereitstellung von Steuerdaten für eine generative Schichtbauvorrichtung nicht nur allein durch Softwarekomponenten, sondern auch allein durch Hardware-Komponenten oder Mischungen aus Hard- und Software realisiert sein kann. In der vorliegenden Anmeldung erwähnte Schnittstellen müssen insbesondere nicht zwangsläufig als Hardware-Komponenten ausgebildet sein, sondern können auch als Softwaremodule realisiert sein, beispielsweise, wenn die darüber eingespeisten bzw. ausgegebenen Daten von bereits auf dem gleichen Gerät realisierten anderen Komponenten übernommen werden können oder an eine andere Komponente nur softwaremäßig übergeben werden müssen. Ebenso könnten die Schnittstellen aus Hardware- und SoftwareKomponenten bestehen, wie zum Beispiel einer Standard-Hardware-Schnittstelle, die durch Software für den konkreten Einsatzzweck speziell konfiguriert wird. Außerdem können mehrere Schnittstellen auch in einer gemeinsamen Schnittstelle, beispielsweise einer Input-Output-Schnittstelle, zusammengefasst sein.

## Patentansprüche

1. Computergestütztes Verfahren zur Bereitstellung von Steuerdaten für eine generative Schichtbauvorrichtung zur Herstellung eines dreidimensionalen Objekts,
wobei in der generativen Schichtbauvorrichtung das zumindest eine Objekt hergestellt wird durch schichtweises Aufbringen eines Aufbaumaterials auf einen Träger oder eine bereits zuvor aufgebrachte Schicht des Aufbaumaterials und Verfestigen des Aufbaumaterials mittels Zufuhr von Strahlungsenergie zu Stellen in einer Schicht, die dem Querschnitt des Objekts in dieser Schicht zugeordnet sind, indem diese Stellen mittels einer Energieeintragseinrichtung dergestalt mit Energiestrahlung abgetastet werden, dass die Energieeintragseinrichtung mindestens ein Energiestrahlbündel so auf vorgegebene Stellen einer Schicht des Aufbaumaterials richtet, dass durch das Energiestrahlbündel eine Verfestigung des Aufbaumaterials bewirkt wird,
wobei das Verfahren zur Bereitstellung von Steuerdaten aufweist:
einen ersten Schritt (S1) des Zugriffs auf eine Mehrzahl von Schichtdatensätzen, die Datenmodelle einer Mehrzahl von während der Herstellung selektiv zu verfestigenden und unmittelbar übereinanderliegenden Aufbaumaterialschichten aufweisen, wobei jeder Schichtdatensatz ein Datenmodell aufweist, in dem einem Objektquerschnitt entsprechende Stellen gekennzeichnet sind, an denen eine Verfestigung des Aufbaumaterials (15) in der zugehörigen Schicht stattfinden soll und wobei in zumindest einem Schichtdatensatz in dem zugehörigen Datenmodell eines Objektquerschnitts ein Downskin-Bereich (62) und ein außerhalb des Downskin-Bereichs (62) liegender Bereich des Objektquerschnitts vorhanden sind, wobei der Downskin-Bereich (62) dadurch definiert ist, dass in mindestens einer von p Schichten unterhalb des Downskin-Bereichs (62) keine Verfestigung von Aufbaumaterial (15) spezifiziert ist, wobei p eine vorgegebene natürliche Zahl größer oder gleich 1 und kleiner als 25 ist, und/oder in dem zugehörigen Datenmodell eines Objektquerschnitts ein Upskin-Bereich (61) und ein außerhalb des Upskin-Bereich (61) liegender Bereich des Objektquerschnitts vorhanden sind, wobei der Upskin-Bereich (61) dadurch definiert ist, dass in mindestens einer von q Schichten oberhalb des Upskin-Bereichs (61) keine Verfestigung von Aufbaumaterial (15) spezifiziert ist, wobei q eine vorgegebene natürliche Zahl größer oder gleich 1 und kleiner als 25 ist,
**dadurch gekennzeichnet, dass** in einem zweiten Schritt (S2) der zumindest eine Schichtdatensatz so abgeändert wird, dass eine zeitliche Reihenfolge für die Abtastung des zugehörigen Objektquerschnitts mit Energiestrahlung dergestalt spezifiziert wird, dass zumindest ein Abschnitt (62a) des Downskin-Bereichs (62), bevorzugt der gesamte Downskin-Bereich, vor dem außerhalb des Downskin-Bereichs (62) liegenden Bereich des Objektquerschnitts abgetastet wird oder zumindest ein Abschnitt (61a) des Upskin-Bereichs (61), bevorzugt der gesamte Upskin-Bereich, vor dem außerhalb des Upskin-Bereichs (61) liegenden Bereich des Objektquerschnitts abgetastet wird, wobei der zeitlich vorrangig abgetastete Abschnitt (62a) des Downskin-Bereichs (62) bzw. der zeitlich vorrangig abgetastete Abschnitt (61a) des Upskin-Bereichs (61) nicht ausschließlich Konturbereiche des Objektquerschnitts umfasst und
in einem dritten Schritt (S3) der im zweiten Schritt abgeänderte zumindest eine Schichtdatensatz für die Generierung eines Steuerdatensatzes für die generative Schichtbauvorrichtung bereitgestellt wird.

2. Verfahren nach Anspruch 1, bei dem dem zumindest einen Abschnitt (62a) des Downskin-Bereichs (62), bevorzugt dem gesamten Downskin-Bereich, und/oder dem zumindest einen Abschnitt (61a) des Upskin-Bereichs (61), bevorzugt dem gesamten Upskin-Bereich, Belichtungsbereiche (S) zugeordnet werden,
wobei in jedem Belichtungsbereich (S) eine Abtastung des Aufbaumaterials mit mindestens einem Energiestrahlbündel in vorzugsweise zueinander parallelen Scanlinien (V) spezifiziert ist.

3. Verfahren nach Anspruch 2, bei dem für den Fall, dass eine Abmessung eines Abschnitts, über den ein Energiestrahlbündel zu bewegen ist, so klein ist und/oder eine Geschwindigkeit der Bewegung eines Energiestrahlbündels über das Aufbaumaterial (15) so groß ist, dass bei der Abtastung entlang einer ersten Scanlinie eine vorgegebene Mindestzeitdauer unterschritten wird, nach Abtasten entlang der ersten Scanlinie eine Wartezeit spezifiziert wird, bevor das Energiestrahlbündel entlang einer zweiten Scanlinie bewegt wird, und/oder eine entlang der ersten Scanlinie und/oder der zweiten Scanlinie pro Einheitsfläche eingetragene Strahlungsenergie verringert wird.

4. Verfahren nach Anspruch 3, wobei für p und/oder q ein Wert kleiner als 10, noch bevorzugter kleiner als 5 vorgegeben ist.

5. Generatives Schichtbauverfahren zur Herstellung eines dreidimensionalen Objekts,
wobei das Objekt (2) hergestellt wird durch schichtweises Aufbringen eines Aufbaumaterials (15) auf einen Träger (10) oder eine bereits zuvor aufgebrachte Schicht des Aufbaumaterials (15) und Verfestigen des Aufbaumaterials (15) mittels Zufuhr von Strahlungsenergie zu Stellen in einer Schicht, die dem Querschnitt des Objekts (2) in dieser Schicht entsprechen, indem diese Stellen mittels einer Energieeintragseinrichtung (20) dergestalt mit Energiestrahlung abgetastet werden, dass die Energieeintragseinrichtung (20) mindestens ein Energiestrahlbündel (22) so auf vorgegebene Stellen einer Schicht des Aufbaumaterials richtet, dass durch das Energiestrahlbündel (22) eine Verfestigung des Aufbaumaterials bewirkt wird,
wobei der Ablauf des generativen Schichtbauverfahrens durch einen Steuerdatensatz gesteuert wird, der auf der Grundlage zumindest eines Schichtdatensatzes generiert wurde, der mittels eines Verfahrens nach einem der Ansprüche 1 bis 4 bereitgestellt wurde.

6. Generatives Schichtbauverfahren nach Anspruch 5, bei dem über den jeweiligen Auftreffort eines Energiestrahlbündels ein Gasstrom geleitet wird und
in einer Schicht der Objektquerschnitt Stellen außerhalb des Downskin-Bereichs (62) aufweist, die weiter stromaufwärts liegen als Stellen in dem zumindest einen Abschnitt (62a) des Downskin-Bereichs (62), und/oder in einer Schicht der Objektquerschnitt Stellen außerhalb des Upskin-Bereichs (61) aufweist, die weiter stromaufwärts liegen als Stellen in dem zumindest einen Abschnitt (61a) des Upskin-Bereichs (61).

7. Generatives Schichtbauverfahren nach Anspruch 6, bei dem
in einer Schicht der Objektquerschnitt Stellen außerhalb des Downskin-Bereichs (62) aufweist, die innerhalb eines vorgegebenen Winkelbereichs (α) um die Richtung herum, aus der der Gasstrom kommt, weiter stromaufwärts liegen als Stellen in dem zumindest einen Abschnitt (62a) des Downskin-Bereichs (62) und/oder in einer Schicht der Objektquerschnitt Stellen außerhalb des Upskin-Bereichs (61) aufweist, die innerhalb eines vorgegebenen Winkelbereichs (α) um die Richtung herum, aus der der Gasstrom kommt, weiter stromaufwärts liegen als Stellen in dem zumindest einen Abschnitt (61a) des Upskin-Bereichs (61).

8. Generatives Schichtbauverfahren nach Anspruch 7, bei dem ein Bereich zwischen -22,5° und +22,5° um die Richtung herum, aus der der Gasstrom kommt, als Winkelbereich (α) vorgegeben ist.

9. Generatives Schichtbauverfahren nach einem der vorangehenden Ansprüche, bei dem die Energieeintragseinrichtung (20) so angesteuert wird, dass die Abtastrichtung (RL), in der das Energiestrahlbündel (22) an einer Verfestigungsstelle über das Aufbaumaterial (15) bewegt wird, und die Richtung (RG) des Gasstroms an dieser Stelle einen Winkel (γ) zueinander aufweisen, der größer oder gleich 22,5° und/oder kleiner oder gleich 337,5° ist, vorzugsweise größer oder gleich 45° und/oder kleiner oder gleich 315° ist, in weiter bevorzugter Weise größer oder gleich 60° und/oder kleiner oder gleich 300° ist und in noch weiter bevorzugter Weise größer oder gleich 90° und/oder kleiner oder gleich 270°.

10. Generatives Schichtbauverfahren nach einem der vorangehenden Ansprüche, bei dem der Ablauf des generativen Schichtbauverfahrens durch einen Steuerdatensatz gesteuert wird, der auf der Grundlage eines mittels eines Verfahrens nach Anspruch 2 bereitgestellten zumindest einen Schichtdatensatzes generiert wurde,
wobei die Energieeintragseinrichtung (20) so angesteuert wird, dass die Abtastrichtungen (RL) zweier benachbarter Scanlinien (V) in zumindest einem Belichtungsbereich (S) einander entgegengesetzt sind und
eine Vorschubrichtung (RV), in der die Scanlinien (V) in diesem Belichtungsbereich (S) nacheinander mit dem mindestens einen Energiestrahlbündel (22) abgefahren werden, und die über alle Stellen des zumindest einen Belichtungsbereichs (S) gemittelte Richtung des Gasstroms (RG) einen Winkel (β) zueinander aufweisen, der größer oder gleich 112,5° und/oder kleiner oder gleich 247,5° ist, vorzugsweise größer oder gleich 135° und/oder kleiner oder gleich 225° ist, in weiter bevorzugter Weise größer oder gleich 150° und/oder kleiner oder gleich 210° ist.

11. Generatives Schichtbauverfahren nach einem der vorangehenden Ansprüche, bei dem der Ablauf des generativen Schichtbauverfahrens durch einen Steuerdatensatz gesteuert wird, der auf der Grundlage eines mittels eines Verfahrens nach Anspruch 2 bereitgestellten zumindest einen Schichtdatensatzes generiert wurde, wobei die Energieeintragseinrichtung (20) so angesteuert wird, dass die Abtastrichtungen (RL) aller Scanlinien (V) in einem Belichtungsbereich (S) gleich sind,
eine Vorschubrichtung (RV), in der die Scanlinien (V) in diesem Belichtungsbereich (S) nacheinander mit dem mindestens einen Energiestrahlbündel (22) abgefahren werden, und die über alle Stellen des zumindest einen Belichtungsbereichs (S) gemittelte Richtung des Gasstroms (RG) einen Winkel (β) zueinander aufweisen, der größer oder gleich 22,5° und/oder kleiner oder gleich 337,5° ist, vorzugsweise größer oder gleich 45° und/oder kleiner oder gleich 315° ist, in weiter bevorzugter Weise größer oder gleich 60° und/oder kleiner oder gleich 300° ist, und
die Abtastrichtungen (RL) und die über alle Stellen des zumindest einen Belichtungsbereichs (S) gemittelte Richtung des Gasstroms (RG) einen Winkel zueinander aufweisen, der größer oder gleich 90° ist.

12. Vorrichtung zur Bereitstellung von Steuerdaten für eine generative Schichtbauvorrichtung zur Herstellung eines dreidimensionalen Objekts,
wobei in der generativen Schichtbauvorrichtung das zumindest eine Objekt hergestellt wird durch schichtweises Aufbringen eines Aufbaumaterials auf einen Träger oder eine bereits zuvor aufgebrachte Schicht des Aufbaumaterials und Verfestigen des Aufbaumaterials mittels Zufuhr von Strahlungsenergie zu Stellen in einer Schicht, die dem Querschnitt des Objekts in dieser Schicht zugeordnet sind, indem diese Stellen mittels einer Energieeintragseinrichtung dergestalt mit Energiestrahlung abgetastet werden, dass die Energieeintragseinrichtung mindestens ein Energiestrahlbündel so auf vorgegebene Stellen einer Schicht des Aufbaumaterials richtet, dass durch das Energiestrahlbündel eine Verfestigung des Aufbaumaterials bewirkt wird,
wobei die Vorrichtung zur Generierung eines Steuerdatensatzes aufweist:
eine Datenzugriffseinheit (101) die ausgelegt ist zum Zugriff auf eine Mehrzahl von Schichtdatensätzen, welche Datenmodelle einer Mehrzahl von während der Herstellung selektiv zu verfestigenden und unmittelbar übereinander liegenden Aufbaumaterialschichten aufweisen, wobei jeder Schichtdatensatz ein Datenmodell aufweist, in welchem einem Objektquerschnitt entsprechende Stellen gekennzeichnet sind, an denen eine Verfestigung des Aufbaumaterials (15) in der zugehörigen Schicht stattfinden soll und wobei in zumindest einem Schichtdatensatz in dem zugehörigen Datenmodell eines Objektquerschnitts ein Downskin-Bereich (62) und ein außerhalb des Downskin-Bereichs (62) liegender Bereich des Objektquerschnitts vorhandensind, wobei der Downskin-Bereich (62) dadurch definiert ist, dass in mindestens einer von p Schichten unterhalb des Downskin-Bereichs (62) keine Verfestigung von Aufbaumaterial (15) spezifiziert ist, wobei p eine vorgegebene natürliche Zahl größer oder gleich 1 und kleiner als 25 ist, und/oder in dem zugehörigen Datenmodell eines Objektquerschnitts ein Upskin-Bereich (61) und ein außerhalb des Upskin-Bereich (61) liegender Bereich des Objektquerschnitts vorhanden sind, wobei der Upskin-Bereich (61) dadurch definiert ist, dass in mindestens einer von q Schichten oberhalb des Upskin-Bereichs (61) keine Verfestigung von Aufbaumaterial (15) spezifiziert ist, wobei q eine vorgegebene natürliche Zahl größer oder gleich 1 und kleiner als 25 ist,
**gekennzeichnet durch** eine Schichtdatensatz-Abänderungseinheit (102), die ausgelegt ist, den zumindest einen Schichtdatensatz so abzuändern, dass eine zeitliche Reihenfolge für die Abtastung des zugehörigen Objektquerschnitts mit Energiestrahlung dergestalt spezifiziert wird, dass zumindest ein Abschnitt (62a) des Downskin-Bereichs (62), bevorzugt der gesamte Downskin-Bereich, vor dem außerhalb des Downskin-Bereichs (62) liegenden Bereich des Objektquerschnitts abgetastet wird oder zumindest ein Abschnitt (61a) des Upskin-Bereichs (61), bevorzugt der gesamte Upskin-Bereich, vor dem außerhalb des Upskin-Bereichs (61) liegenden Bereich des Objektquerschnitts abgetastet wird, wobei der zeitlich vorrangig abgetastete Abschnitt (62a) des Downskin-Bereichs (62) bzw. der zeitlich vorrangig abgetastete Abschnitt (61a) des Upskin-Bereichs (61) nicht ausschließlich Konturbereiche des Objektquerschnitts umfasst und
eine Schichtdatensatz-Bereitstellungseinheit (103), die ausgelegt ist, einen **durch** die Schichtdatensatz-Abänderungseinheit (102) abgeänderten zumindest einen Schichtdatensatz für die Generierung eines Steuerdatensatzes für die generative Schichtbauvorrichtung bereitzustellen.

13. Vorrichtung nach Anspruch 12, wobei die Vorrichtung geeignet ist, ein Verfahren nach einem der Ansprüche 1 bis 4 auszuführen.

14. Generative Schichtbauvorrichtung zur Herstellung eines dreidimensionalen Objekts, wobei in der generativen Schichtbauvorrichtung das Objekt (2) hergestellt wird durch schichtweises Aufbringen eines Aufbaumaterials (15) auf einen Träger (10) oder eine bereits zuvor aufgebrachte Schicht des Aufbaumaterials und Verfestigen des Aufbaumaterials mittels Zufuhr von Strahlungsenergie zu Stellen in einer Schicht, die dem Querschnitt des Objekts in dieser Schicht entsprechen, indem diese Stellen mittels einer Energieeintragseinrichtung (20) mit Energiestrahlung abgetastet werden, wobei die generative Schichtbauvorrichtung aufweist:
eine Energieeintragseinrichtung (20), die geeignet ist, mindestens ein Energiestrahlbündel (22) so auf vorgegebene Stellen einer Schicht des Aufbaumaterials (15) zu richten, dass durch das Energiestrahlbündel (22) eine Verfestigung des Aufbaumaterials (15) bewirkt wird, und
eine Gasflusseinrichtung (30), die geeignet ist, über den Auftreffort eines Energiestrahlbündels einen Gasstrom zu leiten und
wobei die generative Schichtbauvorrichtung so ausgelegt ist, dass sie ein generatives Schichtbauverfahren nach einem der Ansprüche 5 bis 11 ausführen kann.

15. Computerprogramm, mit Programmcodemitteln, um alle Schritte eines Verfahrens gemäß einem der Ansprüche 1 bis 11 auszuführen, wenn das Computerprogramm mittels eines Datenprozessors, insbesondere eines mit einer generativen Schichtbauvorrichtung zusammenwirkenden Datenprozessors, ausgeführt wird.

## Claims

1. A computer-based method of providing control data for a layer-wise additive manufacturing apparatus for manufacturing a three-dimensional object,
wherein in the layer-wise additive manufacturing apparatus the at least one object is manufactured by a layer-wise application of a building material onto a support or a previously applied layer of the building material and by a solidification of the building material by means of a supply of radiation to positions in a layer that correspond to the cross-section of the object in this layer in that these positions are scanned with energetic radiation by means of an energy input unit such that the energy input unit directs at least one energy beam to predetermined positions of a layer of the building material so that a solidification of the building material is effected by the energy beam,
wherein the method of providing control data comprises:
a first step (S1) of accessing a plurality of layer datasets comprising data models of a plurality of building material layers to be selectively solidified during the manufacture and lying immediately one over the other, wherein each layer dataset comprises a data model in which positions corresponding to an object cross-section are marked, at which positions a solidification of the building material (15) in the respective layer shall occur, and wherein in at least one layer dataset there exist in the corresponding data model of an object cross-section a downskin region (62) and a region of the object cross-section lying outside of the downskin region (62), wherein the downskin region (62) is defined such that in at least one of p layers below the downskin region (62) no solidification of building material (15) is specified, wherein p is a predefined natural number larger than or equal to 1 and smaller than 25, and/or there exist in the corresponding data model of an object cross-section a upskin region (61) and a region of the object cross-section lying outside of the upskin region (61), wherein the upskin region (61) is defined such that in at least one of q layers above the upskin region (61) no solidification of building material (15) is specified, wherein q is a predefined natural number larger than or equal to 1 and smaller than 25,
**characterized in that** in a second step (S2) the at least one layer dataset is modified such that a temporal sequence for the scanning of the respective object cross-section with energetic radiation is specified such that at least one portion (62a) of the downskin region (62), preferably the whole downskin region, is scanned before the region of the object cross-section lying outside of the downskin region (62), or at least one portion (61a) of the upskin region (61), preferably the whole upskin region, is scanned before the region of the object cross-section lying outside of the upskin region (61), wherein the portion (62a) of the downskin region (62) that is scanned with temporal priority or the portion (61a) of the upskin region (61) that is scanned with temporal priority do not exclusively comprise contour regions of the object cross-section, and
in a third step (S3) the at least one layer dataset that has been modified in the second step is provided for the generation of a control dataset for the layer-wise additive manufacturing apparatus.

2. The method of claim 1, wherein exposure areas (S) are assigned to the at least one portion (62a) of the downskin region (62), preferably the whole downskin region (62), and/or to the at least one portion (61a) of the upskin region (61), preferably the whole upskin region (61),
wherein in each exposure area (S) a scanning of the building material with at least one energy beam in scanlines that preferably are in parallel to each other is specified.

3. The method of claim 2, wherein in case a dimension of a portion across which an energy beam is to be moved is so small and/or a velocity of movement of an energy beam across the building material (15) is so large that in the scanning along a first scanline a predetermined minimum length of time is underrun, a waiting time after the scanning of the first scanline is specified before the energy beam is moved along a second scanline and/or a radiation energy input per unit area along the first scanline and/or the second scanline is lowered.

4. The method of claim 3, wherein a value smaller than 10, more preferably smaller than 5, is specified for p and/or q.

5. A layer-wise additive manufacturing method for manufacturing a three-dimensional object,
wherein the object (2) is manufactured by a layer-wise application of a building material (15) onto a support (10) or a previously applied layer of the building material (15) and by a solidification of the building material (15) by means of a supply of radiation to positions in a layer that correspond to the cross-section of the object (2) in this layer in that these positions are scanned with energetic radiation by means of an energy input unit (20) such that the energy input unit (20) directs at least one energy beam (22) to predetermined positions of a layer of the building material so that a solidification of the building material is effected by the energy beam (22), wherein the process of the layer-wise additive manufacturing method is controlled by a control dataset that has been generated based on at least one layer dataset that was provided by a method of one of claims 1 to 4.

6. The layer-wise additive manufacturing method of claim 5, wherein a gas flow is directed over the respective position of incidence of an energy beam and
in a layer the object cross-section has positions outside of the downskin region (62) that are located further upstream than positions in the at least one portion (62a) of the downskin region (62) and/or in a layer the object cross-section has positions outside of the upskin region (61) that are located further upstream than positions in the at least one portion (61a) of the upskin region (61).

7. The layer-wise additive manufacturing method of claim 6, wherein
in a layer the object cross-section has positions outside of the downskin region (62) that are located further upstream within an angular range (α) around the direction the gas flow is coming from than positions in the at least one portion (62a) of the downskin region (62) and/or in a layer the object cross-section has positions outside of the upskin region (61) that are located further upstream within an angular range (α) around the direction the gas flow is coming from than positions in the at least one portion (61a) of the upskin region (61).

8. The layer-wise additive manufacturing method of claim 7, wherein
a range between -22.5° and +22.5° around the direction the gas flow is coming from, is specified as angular range (α).

9. The layer-wise additive manufacturing method of one of the preceding claims, wherein the energy input unit (20) is controlled such that the scanning direction (RL), in which the energy beam (22) is moved over the building material (15) at a solidification position and the direction (RG) of the gas flow at this position are at an angle (γ) that is larger than or equal to 22.5° and/or smaller than or equal to 337.5°, preferably larger than or equal to 45° and/or smaller than or equal to 315°, more preferably larger than or equal to 60° and/or smaller than or equal to 300° and even more preferably larger than or equal to 90° and/or smaller than or equal to 270°.

10. The layer-wise additive manufacturing method of one of the preceding claims, wherein the process of the layer-wise additive manufacturing method is controlled by a control dataset that has been generated based on at least one layer dataset that was provided by a method of claim 2,
wherein the energy input unit (20) is controlled such that the scanning directions (RL) of two neighbouring scanlines (V) are opposed to each other in at least one exposure region (S) and
an advance direction (RV) in which the scanlines in this exposure region (S) are subsequently scanned with the at least one energy beam (22) and a direction of the gas flow (RG) averaged over all positions of the at least one exposure region (S) are at an angle (β) that is larger than or equal to 112.5° and/or smaller than or equal to 247.5°, preferably larger than or equal to 135° and/or smaller than or equal to 225°, more preferably larger than or equal to 150° and/or smaller than or equal to 210°.

11. The layer-wise additive manufacturing method of one of the preceding claims, wherein the process of the layer-wise additive manufacturing method is controlled by a control dataset that has been generated based on at least one layer dataset that was provided by a method of claim 2, wherein the energy input unit (20) is controlled such that the scanning directions (RL) of all scanlines (V) in an exposure region (S) are the same,
an advance direction (RV) in which the scanlines in this exposure region (S) are subsequently scanned with the at least one energy beam (22) and a direction of the gas flow (RG) averaged over all positions of the at least one exposure region (S) are at an angle (β) that is larger than or equal to 22.5° and/or smaller than or equal to 337.5°, preferably larger than or equal to 45° and/or smaller than or equal to 315°, more preferably larger than or equal to 60° and/or smaller than or equal to 300°, and
the scanning directions (RL) and a direction of the gas flow (RG) averaged over all positions of the at least one exposure region (S) are at an angle that is larger than or equal to 90°.

12. A device for providing control data for a layer-wise additive manufacturing apparatus for manufacturing a three-dimensional object,
wherein in the layer-wise additive manufacturing apparatus the at least one object is manufactured by a layer-wise application of a building material onto a support or a previously applied layer of the building material and by a solidification of the building material by means of a supply of radiation to positions in a layer that correspond to the cross-section of the object in this layer in that these positions are scanned with energetic radiation by means of an energy input unit such that the energy input unit directs at least one energy beam to predetermined positions of a layer of the building material so that a solidification of the building material is effected by the energy beam,
wherein the device for generating a control dataset comprises:
a data access unit (101) configured to access a plurality of layer datasets comprising data models of a plurality of building material layers to be selectively solidified during the manufacture and lying immediately one over the other, wherein each layer dataset comprises a data model in which positions corresponding to an object cross-section are marked, at which positions a solidification of the building material (15) in the respective layer shall occur, and wherein in at least one layer dataset there exist in the corresponding data model a downskin region (62) and a region of the object cross-section lying outside of the downskin region (62), wherein the downskin region (62) is defined such that in at least one of p layers below the downskin region (62) no solidification of building material (15) is specified, wherein p is a predefined natural number larger than or equal to 1 and smaller than 25, and/or there exist in the corresponding data model of an object cross-section a upskin region (61) and a region of the object cross-section lying outside of the upskin region (61), wherein the upskin region (61) is defined such that in at least one of q layers above the upskin region (61) no solidification of building material (15) is specified, wherein q is a predefined natural number larger than or equal to 1 and smaller than 25,
**characterized by** a layer dataset modification unit (102) that is configured to modify the at least one layer dataset such that a temporal sequence for the scanning of the respective object cross-section with energetic radiation is specified such that at least one portion (62a) of the downskin region (62), preferably the whole downskin region, is scanned before the region of the object cross-section lying outside of the downskin region (62) or at least one portion (61a) of the upskin region (61), preferably the whole upskin region (61), is scanned before the region of the object cross-section lying outside of the upskin region (61), wherein the portion (62a) of the downskin region (62) that is scanned with temporal priority or the portion (61a) of the upskin region (61) that is scanned with temporal priority do not exclusively comprise contour regions of the object cross-section, and
a layer dataset provision unit (103) that is configured to provide at least one layer dataset that has been modified by the layer dataset modification unit (102) for the generation of a control dataset for the layer-wise additive manufacturing apparatus.

13. The device of claim 12, wherein the device is configured to carry out a method of one of claims 1 to 4.

14. A layer-wise additive manufacturing apparatus for manufacturing a three-dimensional object, wherein the object (2) is manufactured in said layer-wise additive manufacturing apparatus by a layer-wise application of a building material (15) onto a support (10) or a previously applied layer of the building material and by a solidification of the building material by means of a supply of radiation to positions in a layer that correspond to the cross-section of the object in this layer in that these positions are scanned with energetic radiation by means of an energy input unit (20), wherein said layer-wise additive manufacturing apparatus comprises:
an energy input unit (20) configured to direct at least one energy beam (22) to predetermined positions of a layer of the building material (15) so that a solidification of the building material (15) is effected by the energy beam (22), and
a gas flow unit (30) configured to direct a gas flow over the position of incidence of the energy beam and
wherein the layer-wise additive manufacturing apparatus is configured to carry out a layer-wise additive manufacturing method of one of claims 5 to 11.

15. A computer program having program code means to perform all steps of a method according to one of claims 1 to 11 when the computer program is executed by a data processor, in particular a data processor interacting with a layer-wise additive manufacturing apparatus.

## Revendications

1. Procédé assisté par ordinateur pour la mise à disposition de données de commande pour un dispositif de construction génératif par couches pour la fabrication d'un objet tridimensionnel,
dans lequel, dans le dispositif de construction génératif par couches, l'au moins un objet est fabriqué par application couche par couche d'un matériau de construction sur un support ou sur une couche du matériau de construction déjà appliquée auparavant, et par solidification du matériau de construction au moyen de l'apport d'énergie de rayonnement à des positions dans une couche qui sont associées à la section transversale de l'objet dans cette couche, en balayant ces positions au moyen d'un dispositif d'introduction d'énergie par un rayonnement d'énergie de telle sorte que le dispositif d'introduction d'énergie dirige au moins un faisceau d'énergie de rayonnement sur des positions prédéfinies d'une couche du matériau de construction de telle sorte qu'une solidification du matériau de construction soit provoquée par le faisceau d'énergie de rayonnement,
dans lequel le procédé pour la mise à disposition de données de commande présente :
une première étape (S1) d'accès à une pluralité d'ensembles de données de couches qui présentent des modèles de données d'une pluralité de couches de matériau de construction à solidifier sélectivement pendant la fabrication et se trouvant directement les unes au-dessus des autres, dans lequel chaque ensemble de données de couches présente un modèle de données dans lequel des positions correspondant à une section transversale d'objet sont caractérisées au niveau desquelles une solidification du matériau de construction (15) doit avoir lieu dans la couche associée, et dans lequel, dans au moins un ensemble de données de couches, une zone downskin (62) et une zone de la section transversale d'objet se trouvant à l'extérieur de la zone downskin (62) sont présentes dans le modèle de données associé d'une section transversale d'objet, dans lequel la zone downskin (62) est définie en ce qu'aucune solidification de matériau de construction (15) n'est spécifiée dans au moins une des p couches au-dessous de la zone downskin (62), dans lequel p est un nombre naturel prédéfini supérieur ou égal à 1 et inférieur à 25, et/ou une zone upskin (61) et une zone de la section transversale d'objet se trouvant à l'extérieur de la zone upskin (61) sont présentes dans le modèle de données associé d'une section transversale d'objet, dans lequel la zone upskin (61) est définie en ce qu'aucune solidification de matériau de construction (15) n'est spécifiée dans au moins une des q couches au-dessus de la zone upskin (61), dans lequel q est un nombre naturel prédéfini supérieur ou égal à 1 et inférieur à 25,
**caractérisé en ce que**, dans une deuxième étape (S2), l'au moins un ensemble de données de couche est modifié de telle sorte qu'un ordre temporel pour le balayage de la section transversale d'objet associée avec un rayonnement d'énergie est spécifié de telle sorte qu'au moins une section (62a) de la zone downskin (62), de préférence la totalité de la zone downskin, est balayée avant la zone de la section transversale d'objet située à l'extérieur de la zone downskin (62) ou au moins une section (61a) de la zone upskin (61), de préférence la totalité de la zone upskin, est balayée avant la zone de la section transversale d'objet située à l'extérieur de la zone upskin (61), dans lequel la section (62a) de la zone downskin (62) balayée de manière prioritaire dans le temps ou la section (61a) de la zone upskin (61) balayée de manière prioritaire dans le temps ne comprend pas exclusivement des zones de contour de la section transversale d'objet et
dans une troisième étape (S3), l'au moins un ensemble de données de couches modifié dans la deuxième étape est mis à disposition pour la génération d'un ensemble de données de commande pour le dispositif de construction génératif par couches .

2. Procédé selon la revendication 1, dans lequel des zones d'exposition (S) sont associées à l'au moins une section (62a) de la zone downskin (62), de préférence à la totalité de la zone downskin, et/ou à l'au moins une section (61a) de la zone upskin (61), de préférence à la totalité de la zone upskin,
dans lequel, dans chaque zone d'exposition (S), un balayage du matériau de construction avec au moins un faisceau d'énergie de rayonnement est spécifié dans des lignes de balayage (V) de préférence parallèles les unes aux autres.

3. Procédé selon la revendication 2, dans lequel, dans le cas où une dimension d'une section à travers laquelle un faisceau d'énergie de rayonnement doit être déplacé est si petite et/ou une vitesse de déplacement d'un faisceau d'énergie de rayonnement à travers le matériau de construction (15) est si grande que, lors du balayage le long d'une première ligne de balayage, une durée minimale prédéfinie n'est pas atteinte, après le balayage le long de la première ligne de balayage, un temps d'attente est spécifié avant que le faisceau d'énergie de rayonnement ne soit déplacé le long d'une deuxième ligne de balayage, et/ou une énergie de rayonnement introduite le long de la première ligne de balayage et/ou de la deuxième ligne de balayage par surface unitaire soit réduite.

4. Procédé selon la revendication 3, dans lequel une valeur inférieure à 10, de manière encore plus préférée inférieure à 5, est prédéfinie pour p et/ou q.

5. Procédé de construction génératif par couches pour la fabrication d'un objet tridimensionnel,
dans lequel l'objet (2) est fabriqué par application couche par couche d'un matériau de construction (15) sur un support (10) ou sur une couche déjà appliquée auparavant du matériau de construction (15), et par solidification du matériau de construction (15) au moyen de l'apport d'énergie de rayonnement à des positions dans une couche qui correspondent à la section transversale de l'objet (2) dans cette couche, en balayant ces positions au moyen d'un dispositif d'introduction d'énergie (20) par l'énergie de rayonnement de telle sorte que le dispositif d'introduction d'énergie (20) dirige au moins un faisceau d'énergie de rayonnement (22) sur des positions prédéfinies d'une couche du matériau de construction de telle sorte qu'une solidification du matériau de construction soit provoquée par le faisceau d'énergie de rayonnement (22),
dans lequel le déroulement du procédé de construction génératif par couches est commandé par un ensemble de données de commande qui a été généré sur la base d'au moins un ensemble de données de couches qui a été mis à disposition au moyen d'un procédé selon l'une quelconque des revendications 1 à 4.

6. Procédé de construction génératif par couches selon la revendication 5, dans lequel un flux de gaz est guidé sur le lieu d'impact respectif d'un faisceau d'énergie de rayonnement, et,
dans une couche, la section transversale d'objet présente des positions à l'extérieur de la zone downskin (62) qui se situent plus en amont que des positions dans l'au moins une section (62a) de la zone downskin (62), et/ou, dans une couche, la section transversale d'objet présente des positions à l'extérieur de la zone upskin (61) qui se situent plus en amont que des positions dans l'au moins une section (61a) de la zone upskin (61).

7. Procédé de construction génératif par couches selon la revendication 6, dans lequel
dans une couche, la section transversale d'objet présente des positions à l'extérieur de la zone downskin (62) qui se situent plus en amont dans une plage angulaire prédéfinie (α) autour de la direction d'où provient le flux de gaz que des positions dans l'au moins une section (62a) de la zone downskin (62) et/ou, dans une couche, la section transversale d'objet présente des positions à l'extérieur de la zone upskin (61) qui se situent plus en amont dans une plage angulaire prédéfinie (α) autour de la direction d'où provient le flux de gaz que des positions dans l'au moins une section (61a) de la zone upskin (61).

8. Procédé de construction génératif par couches selon la revendication 7, dans lequel une plage entre -22,5° et +22,5° autour de la direction d'où provient le flux de gaz est prédéfinie en tant que plage angulaire (α).

9. Procédé de construction génératif par couches selon l'une quelconque des revendications précédentes, dans lequel le dispositif d'alimentation en énergie (20) est commandé de telle sorte que la direction de balayage (RL), dans laquelle le faisceau d'énergie de rayonnement (22) est déplacé au niveau d'une position de solidification à travers le matériau de construction (15), et la direction (RG) du flux de gaz au niveau de cette position présentent un angle (γ) l'une par rapport à l'autre qui est supérieur ou égal à 22,5° et/ou inférieur ou égal à 337,5°, de préférence supérieur ou égal à 45° et/ou inférieur ou égal à 315°, de manière davantage préférée supérieur ou égal à 60° et/ou inférieur ou égal à 300° et de manière encore davantage préférée supérieur ou égal à 90° et/ou inférieur ou égal à 270°.

10. Procédé de construction génératif par couches selon l'une quelconque des revendications précédentes, dans lequel le déroulement du procédé de construction génératif par couches est commandé par un ensemble de données de commande qui a été généré sur la base d'au moins un ensemble de données de couches mis à disposition au moyen d'un procédé selon la revendication 2,
dans lequel le dispositif d'alimentation en énergie (20) est commandé de telle sorte que les directions de balayage (RL) de deux lignes de balayage (V) adjacentes sont opposées l'une à l'autre dans au moins une zone d'exposition (S), et
une direction d'avance (RV), dans laquelle les lignes de balayage (V) dans cette zone d'exposition (S) sont parcourues l'une après l'autre par l'au moins un faisceau d'énergie de rayonnement (22), et la direction du flux de gaz (RG) moyennée sur toutes les positions de l'au moins une zone d'exposition (S) présentent un angle (β) les unes par rapport aux autres qui est supérieur ou égal à 112,5° et/ou inférieur ou égal à 247,5°, de préférence supérieur ou égal à 135° et/ou inférieur ou égal à 225°, de manière davantage préférée supérieur ou égal à 150° et/ou inférieur ou égal à 210°.

11. Procédé de construction génératif par couches selon l'une quelconque des revendications précédentes, dans lequel le déroulement du procédé de construction génératif par couches est commandé par un ensemble de données de commande qui a été généré sur la base d'au moins un ensemble de données de couches mis à disposition au moyen d'un procédé selon la revendication 2, dans lequel le dispositif d'alimentation en énergie (20) est commandé de telle sorte que les directions de balayage (RL) de toutes les lignes de balayage (V) dans une zone d'exposition (S) sont identiques,
une direction d'avance (RV), dans laquelle les lignes de balayage (V) dans cette zone d'exposition (S) sont parcourues l'une après l'autre par l'au moins un faisceau d'énergie de rayonnement (22), et la direction du flux de gaz (RG) moyennée sur toutes les positions de l'au moins une zone d'exposition (S) présentent un angle (β) les unes par rapport aux autres qui est supérieur ou égal à 22,5° et/ou inférieur ou égal à 337,5°, de préférence supérieur ou égal à 45° et/ou inférieur ou égal à 315°, de manière davantage préférée supérieur ou égal à 60° et/ou inférieur ou égal à 300°, et
les directions de balayage (RL) et la direction du flux de gaz (RG) moyennée sur toutes les positions de l'au moins une zone d'exposition (S) présentent un angle les unes par rapport aux autres qui est supérieur ou égal à 90°.

12. Dispositif pour la mise à disposition de données de commande pour un dispositif de construction génératif par couches pour la fabrication d'un objet tridimensionnel,
dans lequel, dans le dispositif de construction génératif par couches, l'au moins un objet est fabriqué par application couche par couche d'un matériau de construction sur un support ou sur une couche déjà appliquée auparavant du matériau de construction, et par solidification du matériau de construction au moyen de l'introduction d'énergie de rayonnement à des positions dans une couche qui sont associées à la section transversale de l'objet dans cette couche, en balayant ces positions au moyen d'un dispositif d'introduction d'énergie par un rayonnement d'énergie de telle sorte que le dispositif d'introduction d'énergie dirige au moins un faisceau d'énergie de rayonnement sur des positions prédéfinies d'une couche du matériau de construction de telle sorte qu'une solidification du matériau de construction soit provoquée par le faisceau d'énergie de rayonnement,
dans lequel le dispositif pour la génération d'un ensemble de données de commande présente :
une unité d'accès aux données (101) qui est conçue pour accéder à une pluralité d'ensembles de données de couche, lesquels présentent des modèles de données d'une pluralité de couches de matériau de construction à solidifier sélectivement pendant la fabrication et se trouvant directement les unes au-dessus des autres, dans lequel chaque ensemble de données de couche présente un modèle de données dans lequel des positions correspondant à une section transversale d'objet sont caractérisées, au niveau desquelles une solidification du matériau de construction (15) doit avoir lieu dans la couche associée et dans lequel, dans au moins un ensemble de données de couche, dans le modèle de données associé d'une section transversale d'objet, une zone de downskin (62) et une zone de la section transversale d'objet se trouvant à l'extérieur de la zone de downskin (62) sont présentes, dans lequel la zone de downskin (62) est définie en ce qu'aucune solidification de matériau de construction (15) n'est spécifiée dans au moins une des p couches au-dessous de la zone de downskin (62), dans lequel p est un nombre naturel prédéfini supérieur ou égal à 1 et inférieur à 25, et/ou dans le modèle de données associé d'une section transversale d'objet, une zone de upskin (61) et une zone de la section transversale d'objet se trouvant à l'extérieur de la zone de upskin (61) sont présentes, dans lequel la zone de upskin (61) est définie en ce qu'aucune solidification de matériau de construction (15) n'est spécifiée dans au moins une des q couches au-dessus de la zone de upskin (61), dans lequel q est un nombre naturel prédéfini supérieur ou égal à 1 et inférieur à 25,
**caractérisé par** une unité de modification d'ensemble de données de couche (102) qui est conçue pour modifier l'au moins un ensemble de données de couche de telle sorte qu'un ordre temporel pour le balayage de la section transversale d'objet associée avec un rayonnement d'énergie est spécifié de telle sorte qu'au moins une section (62a) de la zone downskin (62), de préférence la totalité de la zone downskin, est balayée avant la zone de la section transversale d'objet située à l'extérieur de la zone downskin (62) ou au moins une section (61a) de la zone upskin (61), de préférence la totalité de la zone upskin, est balayée avant la zone de la section transversale d'objet située à l'extérieur de la zone upskin (61), dans lequel la section (62a) de la zone downskin (62) balayée de manière prioritaire dans le temps ou la section (61a) de la zone upskin (61) balayée de manière prioritaire dans le temps ne comprend pas exclusivement des zones de contour de la section transversale d'objet et
une unité de mise à disposition d'ensemble de données de couches (103), qui est conçue pour mettre à disposition au moins un ensemble de données de couches modifié par l'unité de modification d'ensemble de données de couches (102) pour la génération d'un ensemble de données de commande pour le dispositif de construction génératif par couches.

13. Dispositif selon la revendication 12, dans lequel le dispositif est approprié pour exécuter un procédé selon l'une quelconque des revendications 1 à 4.

14. Dispositif de construction génératif par couches pour la fabrication d'un objet tridimensionnel, dans lequel, dans le dispositif de construction génératif par couches, l'objet (2) est fabriqué par application couche par couche d'un matériau de construction (15) sur un support (10) ou sur une couche du matériau de construction déjà appliquée auparavant, et par solidification du matériau de construction au moyen de l'apport d'énergie de rayonnement à des positions dans une couche qui correspondent à la section transversale de l'objet dans cette couche, en balayant ces positions au moyen d'un dispositif d'introduction d'énergie (20) par un rayonnement d'énergie, dans lequel le dispositif de construction génératif par couches présente :
un dispositif d'introduction d'énergie (20) qui est approprié pour diriger au moins un faisceau d'énergie de rayonnement (22) sur des positions prédéfinies d'une couche du matériau de construction (15) de telle sorte qu'une solidification du matériau de construction (15) soit provoquée par le faisceau d'énergie de rayonnement (22), et
un dispositif d'écoulement de gaz (30) qui est approprié pour guider un flux de gaz sur le lieu d'impact d'un faisceau d'énergie de rayonnement et
dans lequel le dispositif de construction génératif par couches est conçu de telle sorte qu'il puisse exécuter un procédé de construction génératif par couches selon l'une quelconque des revendications 5 à 11.

15. Programme informatique, comprenant des moyens de code de programme pour exécuter toutes les étapes d'un procédé selon l'une quelconque des revendications 1 à 11 lorsque le programme informatique est exécuté au moyen d'un processeur de données, en particulier d'un processeur de données coopérant avec un dispositif de construction génératif par couches.
